(19) **Europäisches Patentamt**
**European Patent Office**
**Office européen des brevets**

(11) **EP 3 336 995 B1**

(12) **EUROPÄISCHE PATENTSCHRIFT**

(45) Veröffentlichungstag und Bekanntmachung des Hinweises auf die Patenterteilung:
**07.07.2021   Patentblatt 2021/27**

(51) Int Cl.:
*H02J 3/00* (2006.01)        *H02J 13/00* (2006.01)

(21) Anmeldenummer: **16204939.9**

(22) Anmeldetag: **19.12.2016**

(54) **VERFAHREN, STEUEREINRICHTUNG UND SYSTEM ZUM ERMITTELN VON ZUSTANDSWERTEN ZUR BESCHREIBUNG VON BETRIEBSZUSTÄNDEN IN EINEM TEILNETZ EINES ENERGIEVERSORGUNGSNETZES**

METHOD, CONTROL DEVICE AND SYSTEM FOR DETERMINING STATE VALUES FOR DESCRIBING OPERATING STATES IN A SUBNETWORK OF AN ENERGY SUPPLY NETWORK

PROCÉDÉ, DISPOSITIF DE COMMANDE ET SYSTÈME DE DÉTERMINATION DE VALEURS D'ÉTAT POUR DÉCRIRE DES ÉTATS DE FONCTIONNEMENT DANS UN SOUS-RÉSEAU D'UN RÉSEAU DE DISTRIBUTION D'ÉNERGIE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**20.06.2018   Patentblatt 2018/25**

(73) Patentinhaber: **Siemens Aktiengesellschaft 80333 München (DE)**

(72) Erfinder:
• **Duckheim, Mathias 91052 Erlangen (DE)**
• **Fröhner, Wiebke 92224 Amberg (DE)**
• **Most, Dieter 91052 Erlangen (DE)**
• **Werner, Thomas 91126 Rednitzhembach (DE)**

(56) Entgegenhaltungen:
**EP-A1- 2 942 855**

• **OERTER CHRISTIAN ET AL: "LV-grid automation system - A technology re", 2014 IEEE PES GENERAL MEETING | CONFERENCE & EXPOSITION, IEEE, 27. Juli 2014 (2014-07-27), Seiten 1-5, XP032670577, DOI: 10.1109/PESGM.2014.6939827 [gefunden am 2014-10-29]**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die Erfindung betrifft ein Verfahren zum Ermitteln von Zustandswerten zur Beschreibung von Betriebszuständen in einem Energieversorgungsnetz, das ein elektrische Lasten und/oder elektrische Quellen aufweisendes Teilnetz umfasst.

Bekannt aus der EP 2 942 855 A1 ist ein Verfahren und ein System zum Ermitteln von Zustandswerten zur Beschreibung von Betriebszuständen in einem Energieversorgungsnetz, das ein elektrische Lasten und/oder elektrische Quellen aufweisendes Teilnetz umfasst, wobei dem Teilnetz eine dezentrale Steuereinrichtung zugeordnet ist,

die eine Zustandsschätzeinrichtung umfasst, mittels der Zustandswerte, die elektrische Spannungen an Knoten des Teilnetzes und/oder einen elektrischen Strom auf Leitungsabschnitten des Teilnetzes angeben, unter Verwendung von der Zustandsschätzeinrichtung zugeführten Eingangssignalen geschätzt werden und wobei die Zustandsschätzeinrichtung ein künstliches mathematisches System umfasst, das derart trainiert ist, dass es unter Verwendung der Eingangssignale die Zustandswerte ermittelt, wobei der Zustandsschätzeinrichtung Eingangssignale zugeführt werden, die einen in dem Bereich des Teilnetzes vorliegenden Umgebungszustand angeben, wobei die dezentrale Steuereinrichtung eine Auswerteinrichtung umfasst, mittels der die Zustandswerte daraufhin überprüft werden, ob sie auf einen unzulässigen Betriebszustand des Teilnetzes hinweisen.

Die Erfindung betrifft auch eine dezentrale Steuereinrichtung zum Ermitteln von Zustandswerten zur Beschreibung von Betriebszuständen in einem Energieversorgungsnetz sowie ein entsprechendes System mit einer solchen dezentralen Steuereinrichtung.

Eine der wichtigsten Aufgaben von Betreibern von Energieversorgungsnetzen ist die Sicherung und Verbesserung der Versorgungszuverlässigkeit. Energieversorgungsnetze werden dabei üblicherweise in mehrere Spannungsebenen unterteilt, beispielsweise in eine Hochspannungsebene (über ca. 30kV), über die eine Stromübertragung über weite Strecken stattfindet, eine Mittelspannungsebene (ca. 1 kV bis 30kV), zur Verteilung elektrischer Energie und zum Anschluss von Industriebetrieben, und eine Niederspannungsebene (unter 1kV) zur Verteilung der elektrischen Energie an den Endverbraucher. Dabei werden die Energieversorgungsnetze der verschiedenen Spannungsebenen nicht zwingend von demselben Betreiber betrieben.

Während üblicherweise auf der Hoch- und der Mittelspannungsebene liegende Teilnetze eines Energieversorgungsnetzes mittels Automatisierungsanlagen überwacht, gesteuert und geschützt werden, findet man in Niederspannungs-Teilnetzen bisher kein oder nur ein geringes Maß an Automatisierung vor. Der bislang übliche unidirektionale Energiefluss im Energieversorgungsnetz vom zentralen Erzeuger zu den verteilten Verbrauchern hat bisher eine Automatisierung, z.B. ein Lastmanagement, in den für die Verteilung benötigten Niederspannungs-teilnetzen im Allgemeinen nicht erfordert.

Diese zunehmende dezentrale Einspeisung auf der Niederspannungsebene und die Möglichkeiten, elektrische Lasten zentral zu steuern, veranlassen die Betreiber solcher Niederspannungs-Teilnetze in verstärkter Weise eine Automatisierung vorzusehen. Mit der steigenden Zahl der kleinen und mittleren Erzeuger (Quellen) von erneuerbaren Energien, z. B. Solarstrom, Strom aus Biomassekraftwerken oder Windkraftanlagen, kommt es nämlich vermehrt zu einem bidirektionalen Energiefluss im Niederspannungs-Teilnetz, wodurch Spannungsschwankungen hervorgerufen werden können. Solche immer häufiger auftretenden Spannungsschwankungen zwingen die Netzbetreiber, hier entgegenzuwirken und regelnd bzw. steuernd einzugreifen. Um das Spannungsniveau in Niederspannungs-Teilnetzen innerhalb der vorgeschriebenen Spannungsbänder halten zu können, setzen Netzbetreiber verstärkt Verfahren zur Spannungsblindleistungsoptimierung (Volt/Var Control) ein, die zum Beispiel auf regelbare Transformatoren oder Kondensatorbatterien zurückgreifen.

Die steuernden bzw. regelnden Eingriffe in den Netzbetrieb erfordern grundsätzlich zunächst eine gute Kenntnis des aktuellen elektrischen Betriebszustandes, insbesondere der Spannungen und Ströme, des Energieversorgungsnetzes bzw. des zu betrachtenden Teilnetzes. Nur wenn der Betreiber den Betriebszustand seines Netzes kennt, kann er regelnd oder steuernd auf die jeweiligen Ströme, Spannungen oder Leistungsflüsse einwirken. Da Ströme und Spannungen in einem Energieversorgungsnetz üblicherweise nicht an jeder Position gemessen werden können, führt der Netzbetreiber in der Regel eine Schätzung des elektrischen Betriebszustandes des Energieversorgungsnetzes durch. Diese wird mit sogenannten "Zustandsschätzern" ("State Estimator") durchgeführt und liefert eine konsistente Beschreibung des Betriebszustandes eines Energieversorgungsnetzes, der für weitere mathematische Berechnungen, z.B. für die Spannungsblindleistungsoptimierung, genutzt werden kann.

In aktuellen Forschungsarbeiten werden mittlerweile erste Ansätze für die dezentrale Netzzustands-Schätzungen diskutiert. Beispielsweise ist ein Verfahren der eingangs genannten Art aus dem Aufsatz "LV-Grid Automation System - A Technology Review"; C. Oerter, N. Neusel-Lange; 2014 IEEE PES General Meeting, beschrieben. Bei dem bekannten Verfahren wird in einem dem Niederspannungs-Teilnetz zugeordneten Automatisierungsgerät eine Netzzustandsschätzung durchgeführt, die einem vereinfachten Zustandsschätzer eines Netzleitsystems entspricht. Dazu verwendet das Automatisierungsgerät eine Modellbeschreibung des elektrischen Teilnetzes, bereitet entsprechende mathematische Gleichungen auf und nutzt die vorhandenen Messinformationen aus dem Teilnetz, um eine Schätzung des Betriebszustands zu berechnen. Das beschriebene Verfahren ist jedoch vergleichsweise aufwendig und stellt insbesondere hohe technische Anforderungen an ein die Zustandsschätzung durchführendes Automatisierungsgerät. Zudem wird eine dauerhafte Übertragung von Messwerten in dem Niederspannungs-Teilnetz erforderlich. Sofern der Algorithmus auf von einer übergeordneten Netzleitstelle bereitgestellte Mess- und/oder Netztopologiedaten zurückgreift, wird außerdem eine Datenübertragungsschnittstelle benötigt, die in diesem Umfeld üblicherweise nicht genormt ist und daher oft auf proprietäre Lösungen der Netzbetreiber zurückgreift.

Aus der nicht vorveröffentlichten EP 3 107 174 A1 ist es bekannt, in dezentralen Steuereinrichtungen in den Ortsnetzstationen eines Energieversorgungsnetzes künstliche mathematische Systeme in Form von neuronalen Netzen einzusetzen, die mit wenigen exogenen (also von außerhalb des Energieversorgungsnetzes verursachten) Eingangssignalen Knotenspannungen und Zweigströme in Niederspannungs-Teilnetzen berechnen. Das Training dieser neuronalen Netze geschieht in einem zentralen System (z.B. einer Datenverarbeitungs-Cloud). Dort werden mit Hilfe von komplexen Lastflussberechnungsverfahren Datensätze erzeugt, mit deren Hilfe die neuronalen Netze trainiert werden.

Um mit klassischen Lastflussberechnungsverfahren (z.B. dem Newton-Raphson-Verfahren) Knotenspannungen und Zweigströme zu berechnen, verwenden die in der EP 3 107 174 A1 eingesetzten Netzberechnungsprogramme genaue Datenmodelle, die die Betriebsmittel des automatisierten Teilnetzes mathematisch beschreiben. Aufgrund der meist großen Anzahl der Betriebsmittel in Niederspannungsnetzen, deren Betriebsparameter zudem häufig nur unzureichend bekannt sind, kann die Erfassung und Validierung der für die mathematische Beschreibung benötigten Daten aufwendig und fehleranfällig sein.

Der Erfindung liegt die Aufgabe zugrunde, ein Verfahren der eingangs genannten Art anzugeben, bei dem das Training eines zur Zustandsschätzung eingesetzten künstlichen mathematischen Systems ohne die Notwendigkeit von mathematischen Datenmodellen des Teilnetzes durchgeführt werden kann. Der Erfindung liegt außerdem die Aufgabe zugrunde, eine entsprechende Steuereinrichtung sowie ein System zum Erkennen von unzulässigen Betriebszuständen in einem Energieversorgungsnetz anzugeben.

Hinsichtlich des Verfahrens wird diese Aufgabe erfindungsgemäß durch ein Verfahren gemäß Anspruch 1 gelöst, bei dem zum Trainieren des künstlichen mathematischen Systems einerseits historische Eingangssignale und andererseits als Zustandswerte unmittelbar solche zeitlich zu den historischen Eingangssignalen gehörende elektrischen Spannungen an Knoten des Teilnetzes und/oder elektrischen Ströme auf Leitungsabschnitten des Teilnetzes verwendet werden, die direkt mit an den jeweiligen Knoten und/oder Leitungsabschnitten installierten Messgeräten erfasst worden sind, wobei die Zustandswerte hierfür aus einem Archivsystem entnommen werden, in dem sie nach ihrer Messung gemeinsam mit einer den Zeitpunkt ihrer Messung angebenden Zeitinformation abgespeichert worden sind, und bei dem eine Auswerteinrichtung bei Erkennung eines unzulässigen Betriebszustands regelbare Transformatoren ansteuert und/oder Kondensatorbatterien zu- oder abschaltet.

Bei dem erfindungsgemäßen Verfahren wird somit vorteilhaft auf im Teilnetz vorhandene Messgeräte zurückgegriffen, die die für das Training des künstlichen mathematischen Systems benötigten Zustandswerte unmittelbar bereitstellen. Unter einer "unmittelbaren" Bereitstellung wird vorliegend die Tatsache verstanden, dass die Zustandswerte nicht wie im Stand der Technik unter Verwendung von Datenmodellen und Lastflussberechnungsverfahren aus der Kenntnis der Eingangssignale berechnet, sondern stattdessen durch direkte Messungen im Teilnetz ermittelt werden. Die gemessenen Zustandswerte werden hierfür in einem Archivsystem mit einer den Zeitpunkt ihrer Messung angebenden Zeitinformation abgespeichert und zeitlich entsprechend den historischen - also für vergangene Zeitpunkte ermittelten und abgespeicherten - Eingangssignalen zugeordnet. Auf diese Weise kann ohne die Notwendigkeit komplexer Lastflussberechnungen ein Training des künstlichen mathematischen Systems stattfinden.

Im Betrieb des Teilnetzes, bei dem es sich z.B. um ein Niederspannungs-Teilnetz eines Energieversorgungsnetzes handeln kann, wird nach Abschluss der Trainingsphase daraufhin eine dezentrale Zustandsschätzung des Betriebszustands unter Verwendung des trainierten künstlichen mathematischen vorgenommen.

Das erfindungsgemäße Verfahren sieht vor, dass die dezentrale Steuereinrichtung eine Auswerteinrichtung umfasst, mittels der die Zustandswerte daraufhin überprüft werden, ob sie auf einen unzulässigen Betriebszustand des Teilnetzes hinweisen. Eine vorteilhafte Ausführungsform des erfindungsgemäßen Verfahrens sieht vor, dass mittels der dezentralen Steuereinrichtung ein einen unzulässigen Betriebszustand angebendes Hinweissignal erzeugt wird, wenn die Zustandswerte auf einen unzulässigen Betriebszustand hinweisen.

Auf diese Weise kann die Ermittlung der Zustandswerte vorteilhaft im Rahmen des Betriebs des Energieversorgungsnetzes durchgeführt werden, um etwaige unzulässige Betriebszustände erkennen und ggf. geeignete Gegenmaßnahmen einleiten zu können.

Konkret kann zudem vorgesehen sein, dass als künstliches mathematisches System ein künstliches neuronales Netz, eine Supportvektormaschine oder ein ARX-Modell verwendet wird. Künstliche neuronale Netze sind informationstechnische Strukturen, die einen funktionalen Zusammenhang zwischen Eingangssignalen (z.B. einem Eingangsvektor $\underline{E}$) und Ausgangssignalen (z.B. einem Ausgangsvektor $\underline{A}$) durch ein entsprechendes Training "lernen" können:

$$\underline{A} = f(\underline{E}).$$

Ein künstliches neuronales Netz besteht dabei aus mehreren Neuronen, die untereinander verbunden sind. Die Neuronen sind üblicherweise in mehreren Schichten angeordnet. Eine erste Schicht wird dabei durch eine Eingangsschicht von Neuronen gebildet, an der die einzelnen Elemente der Eingangssignale angelegt werden; jedem Neuron der Eingangsschicht wird dabei üblicherweise ein Element des Eingangssignals zugeführt. Ausgangsseitig weist das künstliche neuronale Netz eine Ausgangsschicht auf, deren Neuronen jeweils einzelne Elemente der Ausgangssignale repräsentieren. Zwischen der Eingangs- und der Ausgangsschicht liegen eine oder mehrere Schichten sogenannter "versteckter Neuronen" ("Hidden Layers" bzw. "Hidden Neurons"). Die Neuronen der Eingangsschicht sind mit allen oder ausgesuchten Neuronen der ersten Schicht versteckter Neuronen verbunden. Diese sind wiederum mit allen oder ausgewählten Neuronen einer etwaigen zweiten Schicht versteckter Neuronen verbunden, usw.. Die letzte Schicht versteckter Neuronen ist schließlich mit den Neuronen der Ausgangsschicht verbunden. Das Verhalten eines neuronalen Netzes und damit die Antwort der Neuronen der Ausgangsschicht auf an die Neuronen der Eingangsschicht angelegte Signale wird durch Trainingsparameter definiert. Diese stellen beispielsweise Schwellenwerte dar, ab denen ein Neuron ein Signal an ein nachfolgendes Neuron abgibt, und/oder Gewichtungsfaktoren für die Wahrscheinlichkeit einer Signalübertragung zwischen zwei bestimmten aufeinanderfolgenden Neuronen.

Zum Anlernen (auch als "Trainieren" bezeichnet) existieren generell mehrere dem Fachmann an sich bekannte Methoden. Gemäß der sogenannten "Multilayer-Perceptron" Methode wird dem neuronalen Netz zunächst neben einer Reihe von Eingangsvektoren eine Reihe von Ausgangsvektoren, von denen bekannt ist, dass sie zu den Eingangsvektoren passen, präsentiert. Die von dem neuronalen Netz berechneten Ausgangsvektoren werden mit den vorgegebenen Ausgangsvektoren verglichen. Die Abweichungen zwischen den berechneten und den erwarteten Werten werden ausgewertet und genutzt, um die Parameter des Berechnungsalgorithmus des neuronalen Netzes zu modifizieren (auch als "Backpropagation" bezeichnet). Das Training ist beendet, sobald die Berechnungsergebnisse des neuronalen Netzes hinreichend genau mit den erwarteten Werten übereinstimmen.

Durch den Einsatz eines künstlichen neuronalen Netzes, das darauf trainiert wurde, aus solchen Eingangssignalen (Eingangsvektor), die einen in dem Bereich des Teilnetzes vorliegenden Umgebungszustand angeben, entsprechende Zustandswerte (Ausgangsvektor) zu ermitteln, die den elektrischen Betriebszustand des Teilnetzes angeben, müssen in der Steuereinrichtung keine aufwendigen Algorithmen durchgeführt werden; eine Implementierung eines einfachen künstlichen neuronalen Netzes verlangt einem Prozessor heutzutage nämlich keine besonderen Anforderungen mehr ab.

Außerdem muss im Betrieb des Teilnetzes keine Vielzahl von Messwerten in Echtzeit ausgewertet werden, da für die Schätzung der Zustandswerte vergleichsweise wenige exogene Eingangssignale ausreichen. Bei dem erfindungsgemäßen Verfahren wird dabei nämlich die Erkenntnis genutzt, dass sich der Betriebszustand des Teilnetzes hinreichend genau aus wenigen exogenen ("netzfremden") Eingangssignalen ermitteln lässt, also solchen Signalen, die nicht durch Erfassung elektrischer Messgrößen an Messstellen in dem Teilnetz ermittelt werden. Vielmehr können hierbei solche Eingangssignale verwendet werden, die dazu geeignet sind, Größen zu beschreiben, die den Betriebszustand des Teilnetzes beeinflussen.

Im laufenden Betrieb - also nach Abschluss der Trainingsphase - findet eine dezentrale Zustandsschätzung des Betriebszustands des betrachteten Teilnetzes statt unter Verwendung des künstlichen neuronalen Netzes statt. Das neuronale Netz ist wie oben beschrieben dazu trainiert, zu Eingangssignalen, die exogene Größen beschreiben, die Einfluss auf das Betriebsverhalten des Teilnetzes haben, Ausgangssignale in Form von Zustandswerten zu bilden, die den Betriebszustand des Teilnetzes beschreiben. Als Zustandswerte werden an den Knoten des Teilnetzes aktuell vorliegende Knotenspannungen und/oder auf den Leitungen des Teilnetzes vorliegende Leitungsströme ermittelt. Die Zustandswerte werden daraufhin von der Auswerteinrichtung für andere Applikationen genutzt, um Maßnahmen gegen ungewünschte Betriebszustände, z.B. Spannungsschwankungen, zu treffen. Solche Maßnahmen bestehen in der Regelung von regelbaren Transformatoren (z.B. über Stufenschalter) und/oder der Zu- oder Abschaltung von Kondensatorbatterien, um eine Spannungsblindleistungskompensation zu betreiben.

Supportvektormaschinen dienen zur Klassifikation und Regression von Eingangswerten und können durch ein Training derart angelernt werden, dass sie zu eingangsseitig vorgegebenen Eingangssignalen die zugehörigen Ausgangssignale in Form der gesuchten Zustandswerte ermitteln. Alternativ können auch sogenannte ARX-Modelle (Autoregressive Model with exogenous input) verwendet werden, um aus den Eingangssignalen die Zustandswerte zu ermitteln.

Gemäß einer vorteilhaften Ausführungsform des erfindungsgemäßen Verfahrens ist vorgesehen, dass zum Trainieren des künstlichen mathematischen Systems ein zweites künstliches mathematisches System, dessen Struktur mit derjenigen des künstlichen mathematischen Systems der Zustandsschätzeinrichtung übereinstimmt, in einer zentralen Datenverarbeitungseinrichtung unter Bildung von Trainingsparametern angelernt wird, die das Verhalten des zweiten künstlichen mathematischen Systems bestimmen, und die Trainingsparameter an das künstliche mathematische System der Zustandsschätzeinrichtung übermittelt und von diesem übernommen werden.

Der Vorteil dieser Ausführungsform besteht darin, dass der Trainingsvorgang nicht von der Steuereinrichtung selbst vorgenommen werden muss, sondern von einer davon verschiedenen Datenverarbeitungseinrichtung, die leistungsfähiger sein kann als die Steuereinrichtung selbst, durchgeführt wird. Bei dieser Datenverarbeitungseinrichtung kann es sich zum Beispiel um einen Rechner einer zentralen Netzleitstelle oder um einen Cloudservice handeln, der von einem entsprechenden Dienstleister angeboten wird.

Alternativ dazu kann gemäß einer anderen vorteilhaften Ausführungsform auch vorgesehen sein, dass das künstliche mathematische System in der dezentralen Steuereinrichtung unter Bildung von Trainingsparametern angelernt wird, die das Verhalten des künstlichen mathematischen Systems bestimmen, und die Trainingsparameter anschließend von dem künstlichen mathematischen System übernommen werden.

Gemäß dieser Ausführungsform findet das Training des künstlichen mathematischen Systems direkt in der dezentralen Steuereinrichtung statt. Da bei dem erfindungsgemäßen Verfahren nämlich auf eine aufwendige Lastflussberechnung verzichtet werden kann, ist die Rechenleistung dezentraler Steuereinrichtungen durchaus ausreichend, um einen Trainingsprozess des künstlichen mathematischen Systems selbst durchzuführen. Diese Ausführungsform des erfindungsgemäßen Verfahrens eignet sich besonders für dezentrale Steuereinrichtungen, die in Anschluss- oder Verteilstationen (z.B. Ortsnetzstationen) eingerichtet sind, in denen auch die Daten der Messeinrichtungen im Teilnetz vorliegen. Beispielsweise ist dies in Anschlussstationen der Fall, in denen die von in dem Teilnetz installierten Energiezählern (Smart Meter) erfassten Messwerte zusammengefasst (Datenkonzentratorfunktion) und an ein zentrales Zählerdatenmanagementsystem weitergeleitet werden.

Damit kann die Funktionsweise der dezentralen Steuereinrichtung wie folgt beschrieben werden: Die dezentrale Steuereinrichtung führt wie oben beschrieben mittels einer ein künstliches mathematisches System umfassenden Zustandsschätzeinrichtung im "Normalbetrieb" des Teilnetzes eine Schätzung der den Betriebszustand des Teilnetzes angebenden Zustandswerte durch. Bei mehreren Teilnetzen können mehrere solcher Steuereinrichtungen existieren, wobei jeweils einem Teilnetz eine Steuereinrichtung zugeordnet sein kann.

Daneben existiert gemäß einer Variante der Trainingsphase eine zentrale Datenverarbeitungseinrichtung, bei der es sich um einen einzelnen Rechner oder um eine lokale oder verteilte Ansammlung mehrerer Rechner bzw. ein Rechnersystem (z.B. ein Cloudcomputing-System) handeln kann. Die zentrale Datenverarbeitungseinrichtung wird gemäß dieser Variante zum Training des künstlichen mathematischen Systems verwendet. Dazu ist auf der zentralen Datenverarbeitungseinrichtung ebenfalls ein künstliches mathematisches System ("zweites künstliches mathematisches System") implementiert, dessen Struktur mit der Struktur des künstlichen mathematischen Systems in der Zustandsschätzeinrichtung der dezentralen Steuereinrichtung übereinstimmt. Dieses zweite künstliche mathematische System wird mit Hilfe von Messwerten aus dem Teilnetz trainiert. Die dabei erzeugten Trainingsparameter, z.B. Schwellenwerte der einzelnen Neuronen und/oder Gewichtungsfaktoren für Verbindungen zwischen einzelnen Neuronen eines neuronalen Netzes, werden daraufhin auf das künstliche mathematische System der dezentralen Steuereinrichtung übertragen.

Gemäß einer anderen Variante der Trainingsphase wird das Anlernen des künstlichen mathematischen Systems direkt in der dezentralen Steuereinrichtung durchgeführt. Hierbei entfällt die Notwendigkeit eines zweiten künstlichen mathematischen Systems, es wird vielmehr direkt das künstliche mathematische System der dezentralen Steuereinrichtung angelernt.

Das Training kann bei beiden Varianten beispielsweise wie nachfolgend erläutert durchgeführt werden. Zunächst werden Trainingsparameter für das strukturgleiche zweite künstliche mathematische System bzw. direkt für das künstliche mathematische System erzeugt. Dazu werden unmittelbar erfasste Messwerte aus dem Teilnetz verwendet.

Darüber hinaus ist ein Archivsystem vorhanden, welches die zur Durchführung der Abschätzung verwendeten Eingangssignale in Form digitaler Datensätze speichert und bereitstellt. Das Archivsystem kann z.B. historische Wetterinformationen, Schaltzustände etc. bereitstellen. Diese sind nach Uhrzeiten und Tagesarten klassifiziert, so dass eine zeitgenaue Auswertung erfolgen kann.

Im Gegensatz zu einem den Netzbetrieb steuernden Netzleitsystem muss das Training des künstlichen mathematischen Systems nicht in Echtzeit stattfinden. Das Training dient dazu, auf der Basis der von dem Archivsystem bereitgestellten Eingangssignale (z.B. archivierten Wetterinformationen etc.) die Trainingsparameter für das künstliche mathematische System zu berechnen. Dazu werden für das zu betrachtende Teilnetz beispielsweise die folgenden Schritte durchlaufen:

- Auswahl von archivierten Eingangssignalen (z.B. Wetterinformation, etc.) eines Betrachtungszeitraums (z.B. ein bestimmter Tag oder eine bestimmte Zeitspanne innerhalb eines Tages) aus dem Archivsystem.

- Auswählen von Messwerten der Knotenspannungen und/oder Leitungsströme in dem Teilnetz mit Hilfe der für den ausgewählten Betrachtungszeitraum. Diese sind ebenfalls in dem Archivsystem abgelegt.

- Ermitteln von Trainingsparametern für das künstliche mathematische System, z.B. anhand einer Trainingsmethode für neuronale Netze (s.o.).

Diese Schritte werden für mehrere Betrachtungszeiträume durchlaufen. Als Ergebnis dieser Durchläufe liegt eine Sammlung von Daten vor, die aus Eingangssignalen und dazu passenden Ausgangssignalen (Zustandswerten) bestehen.

Mit diesen Daten wird gemäß der ersten Variante zunächst das zweite künstliche mathematische System trainiert, das auf der zentralen Datenverarbeitungseinrichtung implementiert ist. Nachdem das Training dieses zweiten künstlichen mathematischen Systems abgeschlossen ist, liegen die Trainingsparameter, z.B. Schwellenwert und/oder eine Matrix von Gewichtungsfaktoren des zweiten künstlichen mathematischen Systems fest. Diese Trainingsparameter werden von der zentralen Datenverarbeitungseinrichtung an die dezentrale Steuereinrichtung des betreffenden Teilnetzes übermittelt und dort importiert, d.h. als Trainingsparameter des künstlichen mathematischen Systems der Zustandsschätzeinrichtung der Steuereinrichtung übernommen.

Gemäß der zweiten Variante werden die Trainingsparameter direkt für das auf der Steuereinrichtung implementierte künstliche mathematische System erzeugt und nach dem Training von diesem übernommen.

Somit liegt bei beiden Varianten in der Zustandsschätzeinrichtung nun ein trainiertes künstliches mathematisches System vor, welches für die Zustandsschätzung der Zustandswerte des Teilnetzes vorbereitet ist.

Die Trainingsphase ist in jedem Fall vor einer Betriebsaufnahme des Teilnetzes und bei wesentlichen Topologieänderungen (z.B. Einfügen neuer Netzabschnitte, Quellen oder Lasten) durchzuführen, damit das künstliche mathematische System jeweils an die aktuellen Gegebenheiten des Teilnetzes angepasst ist.

Für beide Arten der Durchführung der Trainingsphase ist zudem vorgesehen, dass bei Vorliegen eines Hinweissignals ein Steuersignal erzeugt wird, das zur Steuerung mindestens einer Komponente des Teilnetzes herangezogen wird.

Bei Vorliegen eines Hinweissignals, das eine Spannungsbandverletzung angibt (die Spannung an zumindest einem Knoten des Teilnetzes liegt oberhalb oder unterhalb eines erlaubten Spannungsbereichs), kann ein Steuersignal erzeugt werden, mit dem ein Stufenschalter eines regelbaren Transformators angesteuert wird, um seine Ausgangsspannung entsprechend anzuheben bzw. abzusenken. Andere Steuersignale können z.B. eine teilweise oder vollständige Zu- oder Abschaltung von Kapazitäten oder Induktivitäten im Teilnetz bewirken. Außerdem kann das Hinweissignal auch dem Betreiber des Teilnetzes in geeigneter Weise zur Kenntnis gebracht werden.

Konkret kann beispielsweise vorgesehen sein, dass als Eingangssignale ein oder mehrere der folgenden Signale verwendet werden:

- ein das aktuelle Wetter im Bereich des Teilnetzes angebendes Wettersignal (ein solches Wettersignal kann beispielsweise Informationen über Sonneneinstrahlung (Helligkeit und Einstrahlungswinkel), Windrichtung, Windgeschwindigkeit, Umgebungstemperatur etc. umfassen);

- ein die aktuelle Uhrzeit angebendes Zeitsignal;

- ein die Art des aktuellen Tages angebendes Tagesartsignal (ein solches Tagesartsignal kann beispielsweise angeben, ob es sich um einen Wochentag, einen Samstag, einen Sonntag, einen Feiertag, einen Arbeitstag etc. handelt);

- ein eine Erzeugungs- und/oder Verbrauchscharakteristik zumindest einer typischen Quelle und/oder Last in dem Teilnetz angebendes Referenzsignal (ein solches Referenzsignal gibt Zeitreihen (normierter) elektrischer Leistungen eines oder mehrerer Erzeuger bzw. Verbraucher an, die typischerweise ins Netz eingespeist bzw. aus diesem entnommen werden);

- ein einen Schaltzustand von Schalteinrichtungen im Teilnetz angebendes Schaltzustandssignal (ein solches Schaltzustandssignal kann beispielsweise angeben, ob eine manuell oder automatisch bedienbare Schalteinrichtung oder eine Sicherung den Strom leitet oder unterbricht).

Die genannten Signale sind für sich genommen oder in Kombination dazu geeignet, exogene Größen zu beschreiben, die den Betriebszustand, insbesondere das Verhalten der Lasten und/oder der Quellen, des Teilnetzes beeinflussen. Die Signale können dabei lokal im Bereich des Teilnetzes (z.B. mittels entsprechender Sensoren einer Ortsnetzstation) aufgenommen und/oder von externen Systemen (z.B. Wetterdienste) bezogen werden.

Befinden sich beispielsweise regenerative Energieerzeuger in Form von Photovoltaikanlagen oder Windkraftanlagen in dem Teilnetz, ist deren Einspeisung elektrischer Energie abhängig vom im Bereich des Teilnetzes herrschenden Wetter, beispielsweise Sonneneinstrahlung (für Photovoltaik) und Windrichtung und Windstärke (für Windkraftanlagen). Diese Informationen können der Steuereinrichtung als Wettersignal zugeführt werden. Das neuronale Netz ist in dem Fall darauf trainiert worden, unter Verwendung des Eingangssignals in Form des Wettersignals die durch die Einspeisung beeinflussten Zustandswerte des Teilnetzes zu ermitteln.

Daneben existieren weitere Einflüsse. Beispielsweise hängt das Lastverhalten signifikant von der Tagesart ab. So liegen Lastspitzen an normalen Wochentagen (Arbeitstage) in bestimmten, relativ genau vorhersagbaren Zeitfenstern, während sie am Wochenende durch ein verschiedenes Verbraucherverhalten in anderen Zeitfenstern liegen. Auch auf diesen Zusammenhang kann das neuronale Netz trainiert sein, so dass es unter Verwendung entsprechender Uhrzeit- und Tagesartsignale eine Abschätzung der Lastsituation im Teilnetz vornehmen kann.

Durch die Verwendung von Informationen über die Schaltzustände von Schalteinrichtungen (inkl. Sicherungen) können Einflüsse durch unterschiedliche Lastflüsse im Teilnetz berücksichtigt werden. Außerdem können Abschaltungen bzw. Zuschaltungen einzelner Abschnitte des Teilnetzes in die Abschätzung einfließen.

Eine besonders gute Abschätzung kann natürlich dann getroffen werden, wenn mehrere der beschriebenen Signale als Eingangssignal miteinander kombiniert werden (z.B. ein Wettersignal und ein Tagesartsignal). Hierdurch lassen sich verschiedene Einflüsse auf Lasten und Quellen in dem Teilnetz berücksichtigen. Die Auswahl der jeweils geeigneten Signale wird sich von Teilnetz zu Teilnetz unterscheiden und ist z.B. von der Art und Menge der Quellen und Lasten sowie dem Vorhandensein etwaiger Messsensoren im abhängig.

Eine vorteilhafte Ausführungsform sieht in diesem Zusammenhang vor, dass das künstliche mathematische System eine erste Betriebsart aufweist, in dem es unter Verwendung der Eingangssignale Zustandssignale in Form von Spannungen an Knoten des Teilnetzes und elektrischen Strömen auf Leitungsabschnitten des Teilnetzes erzeugt, und dass das künstliche mathematische System eine zweite Betriebsart aufweist, in dem es unter Verwendung der Eingangssignale und zusätzlichen Messwerten von Strömen und/oder Spannungen an einem Übergabepunkt des Teilnetzes Zustandssignale ausschließlich in Form von Spannungen an Knoten des Teilnetzes erzeugt.

Während die zweite Betriebsart dann vorteilhaft ist, wenn zusätzlich zu den exogenen Größen auch elektrische Messgrößen von einem Übergabepunkt (also einer Stelle, an der das Teilnetz mit einem übergeordneten Energieversorgungsnetz verbunden ist, z.B. einer Ortsnetzstation) des Teilnetzes vorliegen, kann die erste Betriebsart dann eingesetzt werden, wenn solche elektrischen Messgrößen von dem Übergabepunkt nicht vorliegen, die Übertragung der Messgrößen zur dezentralen Steuereinrichtung temporär gestört ist, oder wenn die Schätzung der Zustandswerte für einen zukünftigen Zeitbereich erfolgen soll, für den noch keine Messgrößen vorliegen.

Die Ausbildung der beiden Betriebsarten kann entweder durch unterschiedliche Parametrierung des künstlichen mathematischen Systems erfolgen oder durch Unterteilung des künstlichen mathematischen Systems in zwei Sub-Systeme, von denen das eine Sub-System die erste und das zweite Sub-System die zweite Betriebsart realisiert.

Im Zusammenhang mit den beiden Betriebsarten kann zudem vorgesehen sein, dass die Betriebsart des künstlichen mathematischen Systems zwischen der ersten Betriebsart und der zweiten Betriebsart umschaltbar ist.

Eine solche Umschaltung kann entweder durch Nutzereingabe oder automatisch erfolgen. Die automatische Umschaltung kann beispielsweise dadurch stattfinden, dass eine Erkennung stattfindet, ob neben den exogenen Eingangssignalen aktuell auch elektrische Messgrößen von dem Übergabepunkt vorliegen (dann wird automatisch die zweite Betriebsart gewählt) oder nicht (dann wird automatisch die erste Betriebsart gewählt).

Gemäß einer weiteren vorteilhaften Ausführungsform kann zudem vorgesehen sein, dass als Eingangssignale außerdem Messwerte elektrischer Größen verwendet werden, die in einem Übergabe- oder Verteilpunkt des Teilnetzes oder einer aufgrund einer auf das Teilnetz bezogenen Netzplanung als für den Betrieb des Teilnetzes als besonders wesentlich eingestuften Stelle des Teilnetzes erfasst worden sind.

Als Übergabepunkt wird diejenige Stelle angesehen, an der das Teilnetz mit einem übergeordneten Energieversorgungsnetz verbunden ist, z.B. eine Ortsnetzstation. Als Verteilpunkt wird ein zur Verteilung elektrischer Energie innerhalb des Teilnetzes eingesetzter Netzknoten angesehen, z.B. ein Kabelverteilerschrank zur Unterverteilung elektrischer Energie an einzelne Verbraucher.

Mittels an dem Übergabepunkt des Teilnetzes erfasster Ströme und oder Spannungen kann die Abschätzung der Zustandswerte unterstützt werden. Dadurch dass hierfür lediglich eine Messstelle erforderlich ist, wird kein komplexes Messsystem im Teilnetz benötigt. Alternativ oder zusätzlich zur Messung am Übergabepunkt können auch Messungen an Verbindungspunkten oder anderen als wesentlich eingestuften Stellen in dem Teilnetz herangezogen werden, um elektrische Parameter wie Strom und Spannung zu erfassen und ein entsprechendes Messsignal zu bilden. Das neuronale Netz ist in diesem Fall darauf trainiert, aus den exogenen Eingangssignalen und einem oder mehreren elektrischen Messsignalen die entsprechenden Zustandswerte abzuschätzen.

Im Rahmen einer Netzplanung als besonders wesentlich eingestufte Stellen innerhalb des Teilnetzes können beispielsweise solche Stellen sein, an denen ein erhöhter Stromfluss durch interne Speisung von Lasten durch Quellen erwartet wird, z.B. an der Verbindungsstelle zweier Netzzweige, wobei der erste Netzzweig überwiegend elektrische Quellen und der zweite Netzzweig überwiegend elektrische Lasten aufweist. Solche Stellen können im Rahmen einer Netzplanung oder -simulation erkannt und als besonders wesentlich eingestuft werden, so dass dort ein entsprechender Sensor zur Erfassung von Strom und/oder Spannung vorgesehen wird.

Gemäß einer weiteren vorteilhaften Ausführungsform des erfindungsgemäßen Verfahrens wird vorgeschlagen, dass die Steuereinrichtung mittels der Zustandsschätzeinrichtung ermittelte Zustandswerte im Betrieb des Teilnetzes mit für ausgewählte Messstellen des Teilnetzes gemessenen elektrischen Parametern vergleicht, und bei einer über einem Toleranzschwellenwert liegenden Abweichung zwischen den Zustandswerten und den elektrischen Parametern ein erneutes Training des künstlichen mathematischen Systems der Zustandsschätzeinrichtung durchgeführt wird.

Gemäß dieser Ausführungsform findet somit eine Selbstkontrolle der Zuverlässigkeit der mit dem künstlichen mathematischen System der dezentralen Steuereinrichtung durchgeführten Abschätzung der Zustandswerte statt. Stimmen diese nicht hinreichend genau mit tatsächlichen elektrischen Zuständen des Teilnetzes, die an ausgewählten Messstellen erfasst werden, überein, so wird ein erneutes Training durchgeführt. Damit kann das künstliche mathematische System auch langsamen Änderungen im Verhalten des Teilnetzes, die nicht auf wesentliche Eingriffe und Veränderungen zurückzuführen sind, nachgeführt werden. Als ausgewählte Messstellen können beispielsweise in dem Teilnetz ohnehin vorhandene Messsensoren (z.B. zu lokalen Schutz- oder Steuerzwecken), Steuergeräte an dezentralen Quellen oder sogenannte Smart Meter verwendet werden. Die Selbstkontrolle kann hierbei kontinuierlich oder zeitweise stattfinden.

Gemäß einer weiteren vorteilhaften Ausführungsform ist vorgesehen, dass das Hinweissignal erzeugt wird, wenn anhand zumindest eines der geschätzten Zustandswerte eine Schwellenwertverletzung erkannt wird.

Insbesondere kann hierbei das Hinweissignal dann erzeugt werden, wenn durch einen oder mehrere ermittelte Knotenspannungen eine Verletzung eines vorgegebenen Spannungsbandes und/oder durch einen oder mehrere ermittelten Leitungsströme eine Verletzung einer maximal erlaubten Strombelastung eines Leitungsabschnitts vorliegt.

Eine weitere vorteilhafte Ausführungsform des erfindungsgemäßen Verfahrens sieht zudem vor, dass die Eingangssignale dem künstlichen mathematischen System als Eingangsvektor zugeführt werden und die Zustandswerte von dem künstlichen mathematischen System als Ausgangsvektor abgegeben werden, wobei die Sortierung der Zustandswerte in dem Ausgangsvektor unabhängig von der Topologie des Teilnetzes ist.

Durch die Darstellung der Eingangssignale und der Zustandswerte in Form von Vektoren lässt sich eine vergleichsweise einfache mathematische Beschreibung der jeweiligen Werte erreichen. Außerdem besteht ein besonderer Vorteil darin, dass die Sortierung der Zustandswerte im Ausgangsvektor nicht der Topologie des Teilnetzes entsprechen muss. Für die Ermittlung eines unzulässigen Betriebszustands in Form einer Spannungsbandverletzung oder eines zu hohen Leitungsstroms ist es nämlich grundsätzlich unerheblich, wo genau die Verletzung stattfindet, solange festgestellt werden kann, dass sie überhaupt eingetreten ist. Wenn feststeht, dass ein solcher unzulässiger Betriebszustand eingetreten ist, können nämlich - unabhängig von seinem genauen Ort - geeignete Gegenmaßnahmen getroffen werden, wie z.B. die Anpassung der Stellung eines Stufenschalters eines Transformators zur Regulierung der Spannung im Teilnetz, die sich auf alle dem Transformator nachgelagerten Netzknoten auswirkt. Beispielsweise ist es zur Behebung einer Spannungsbandverletzung nämlich nicht zwangsläufig notwendig zu wissen, wo diese vorliegt; es reicht vielmehr völlig aus, die Höhe der Verletzung zu kennen und zu wissen, dass sie existiert. Die heute üblichen Verfahren zur Korrektur von Spannungsbandverletzungen, zum Beispiel mit einem regelbaren Ortsnetztransformator, erreichen durch Erhöhung der sekundärseitigen Spannungsstufe eine Erhöhung der Spannung im gesamten darunter liegenden Netzbereich und benötigen daher die Kenntnis des tatsächlichen Ortes der Verletzung nicht. Deshalb kann zum Zweck der Spannungsregelung sowohl ein nach Netztopologie sortierter Ausgangsvektor als auch ein beliebig umsortierter Ausgangsvektor verwendet werden.

Gemäß einer weiteren vorteilhaften Ausführungsform des erfindungsgemäßen Verfahrens schließlich ist vorgesehen, dass die zum Training des künstlichen mathematischen Systems verwendeten elektrischen Spannungen und/oder elektrischen Ströme mit im Teilnetz installierten elektrischen Energiezählern (insbesondere sogenannten "Smart Metern") erfasst worden sind.

Moderne intelligente Zähler liefern nämlich neben den eigentlichen Energiemesswerten auch Kenngrößen wie Spannungsbeträge, Phasenwinkel zwischen Strom und Spannung (cos Phi) etc. und senden diese in das zentrale Zählerdatenmanagementsystem. Beispielsweise können die intelligenten Zähler die Größen Wirkleistung (jeweils Einspeisung und Bezug), Blindleistung (jeweils Einspeisung und Bezug), Frequenz, Spannung, Strom und Phasenwinkel erfassen. Die letztgenannte Ausführungsform sieht vor, aus diesen Messungen die Trainingsdaten für das künstliche mathematische System zu gewinnen. Dies ist besonders deshalb vorteilhaft, da solche Energiezähler in vielen Niederspannungs-Teilnetzen ohnehin vorhanden sind oder zukünftig dort installiert werden, so dass das Vorsehen separater Messgeräte nicht notwendig ist.

Die oben genannte Aufgabe wird auch durch die in Anspruch 15 definierte dezentrale Steuereinrichtung zum Ermitteln von Zustandswerten zur Beschreibung von Betriebszuständen in einem elektrische Lasten und/oder elektrische Quellen aufweisenden Teilnetz eines elektrischen Energieversorgungsnetzes gelöst, wobei die dezentrale Steuereinrichtung dem Teilnetz zugeordnet ist und eine Zustandsschätzeinrichtung umfasst, die dazu eingerichtet ist, Zustandswerte, die elektrische Spannungen an Knoten des Teilnetzes und/oder einen elektrischen Strom auf Leitungsabschnitten des Teilnetzes angeben, unter Verwendung von der Zustandsschätzeinrichtung zugeführten Eingangssignalen zu schätzen, die einen in dem Bereich des Teilnetzes vorliegenden Umgebungszustand angeben, und wobei die Zustandsschätzeinrichtung ein künstliches mathematisches System umfasst, das dazu trainiert ist, unter Verwendung der Eingangssignale die Zustandswerte zu ermitteln.

Erfindungsgemäß ist vorgesehen, dass die dezentrale Steuereinrichtung dazu eingerichtet ist, zum Trainieren des künstlichen mathematischen Systems einerseits historische Eingangssignale und andererseits als Zustandswerte unmittelbar solche zeitlich zu den historischen Eingangssignalen gehörende elektrischen Spannungen an Knoten des Teilnetzes und/oder elektrischen Ströme auf Leitungsabschnitten des Teilnetzes zu verwenden, die direkt mit an den jeweiligen Knoten und/oder Leitungsabschnitten installierten Messgeräten erfasst worden sind, wobei die Zustandswerte hierfür aus einem Archivsystem entnommen werden, in dem sie nach ihrer Messung gemeinsam mit einer den Zeitpunkt ihrer Messung angebenden Zeitinformation abgespeichert worden sind.

Die erfindungemäße Steuereinrichtung sieht vor, dass die dezentrale Steuereinrichtung eine Auswerteinrichtung umfasst, die dazu eingerichtet ist, die Zustandswerte daraufhin zu überprüfen, ob sie auf einen ungewünschten elektrischen Betriebszustand des Teilnetzes des Energieversorgungsnetzes hinweisen, und die Auswerteinrichtung dazu eingerichtet ist, bei Erkennung eines unzulässigen Betriebszustands regelbare Transformatoren anzusteuern und/oder Kondensatorbatterien zu- oder abzuschalten.

Eine vorteilhafte Ausführungsform der erfindungsgemäßen Steuereinreichtung sieht vor, das Hinweissignal zu erzeugen, falls die Zustandswerte auf einen ungewünschten elektrischen Betriebszustand hinweisen.

Die dezentrale Steuereinrichtung kann hierbei beispielsweise Bestandteil einer dem Teilnetz zugeordneten Ortsnetzstation sein.

Als Ortsnetzstation wird in diesem Zusammenhang jede Verbindungsstelle zwischen zwei Teilnetzen angesehen. Üblicherweise umfasst eine Ortsnetzstation einen oder mehrere Transformatoren sowie Steuerelektronik und ggf. Sensoren und Kommunikationstechnik. Die erfindungsgemäße Steuereinheit lässt sich daher sehr einfach in die ohnehin vorhandenen Komponenten integrieren. Zusätzlich können lokale Sensoren an der Ortsnetzstation vorgesehen sein, mit denen Wetterinformationen im Bereich des Teilnetzes erfasst und als Wettersignal an die Steuereinrichtung weitergegeben werden. Alternativ können solche Informationen auch von externen Dienstanbietern übernommen werden. Eine Uhrzeitinformation und Angabe einer Tagesart kann zudem über einen integrierten oder externen Zeitgeber erfolgen.

Die Steuereinrichtung kann hierbei z.B. in Form eines Automatisierungsgerätes, z.B. eines Unterstationsleitgerätes, oder eines Industrie-PCs ausgeführt sein.

Hinsichtlich der erfindungsgemäßen Steuerrichtung gelten alle zu dem erfindungsgemäßen Verfahren voranstehend und nachfolgend gemachten Ausführungen und umgekehrt in entsprechender Weise, insbesondere ist die erfindungsgemäße Steuereinrichtung zur Durchführung des erfindungsgemäßen Verfahrens in jeder beliebigen Ausführungsform oder einer Kombination beliebiger Ausführungsformen eingerichtet. Auch hinsichtlich der Vorteile der erfindungsgemäßen Steuereinrichtung wird auf die zu dem erfindungsgemäßen Verfahren beschriebenen Vorteile verwiesen.

Die oben genannte Aufgabe wird schließlich auch durch das in Anspruch 18 definierte System zum Ermitteln von Zustandswerten zur Beschreibung von Betriebszuständen in einem elektrische Lasten und/oder elektrische Quellen aufweisenden Teilnetz eines elektrischen Energieversorgungsnetzes gelöst, mit einer dem Teilnetz zugeordneten dezentralen Steuereinrichtung, die eine Zustandsschätzeinrichtung umfasst, die dazu eingerichtet ist, Zustandswerte, die elektrische Spannungen an Knoten des Teilnetzes und/oder einen elektrischen Strom auf Leitungsabschnitten des Teilnetzes angeben, unter Verwendung von der Zustandsschätzeinrichtung zugeführten Eingangssignalen zu schätzen, die einen in dem Bereich des Teilnetzes vorliegenden Umgebungszustand angeben, wobei die Zustandsschätzeinrichtung ein künstliches mathematisches System umfasst, das dazu trainiert ist, unter Verwendung der Eingangssignale die Zustandswerte zu ermitteln.

Erfindungsgemäß ist vorgesehen, dass das System eine zentrale Datenverarbeitungseinrichtung aufweist, die dazu eingerichtet ist, zum Trainieren des künstlichen mathematischen Systems der Zustandsschätzeinrichtung der dezentralen Steuereinrichtung ein zweites künstliches mathematisches System, dessen Struktur mit derjenigen des künstlichen mathematischen Systems der Zustandsschätzeinrichtung übereinstimmt, unter Verwendung von einerseits historischen Eingangssignalen und andererseits als Zustandswerten unmittelbar solchen zeitlich zu den historischen Eingangssignalen gehörenden elektrischen Spannungen an Knoten des Teilnetzes und/oder elektrischen Ströme auf Leitungsabschnitten des Teilnetzes unter Bildung von Trainingsparametern, die das Verhalten des zweiten künstlichen mathematischen Systems bestimmen, anzulernen, wobei die zu den historischen Eingangssignalen gehörenden elektrischen Spannungen und/oder elektrischen Ströme direkt mit an den jeweiligen Knoten und/oder Leitungsabschnitten installierten Messgeräten erfasst worden sind, wobei die Zustandswerte hierfür aus einem Archivsystem entnommen werden, in dem sie nach ihrer Messung gemeinsam mit einer den Zeitpunkt ihrer Messung angebenden Zeitinformation abgespeichert worden sind, und wobei die dezentrale Steuereinrichtung eine Auswerteinrichtung umfasst, die dazu eingerichtet ist, die Zustandswerte daraufhin zu überprüfen, ob sie auf einen ungewünschten elektrischen Betriebszustand des Teilnetzes des Energieversorgungsnetzes hinweisen, und die Auswerteinrichtung dazu eingerichtet ist, das Hinweissignal zu erzeugen, falls die Zustandswerte auf einen ungewünschten elektrischen Betriebszustand hinweisen. Hinsichtlich des erfindungsgemäßen Systems gelten alle zu dem erfindungsgemäßen Verfahren und der erfindungsgemäßen Steuereinrichtung voranstehend und nachfolgend gemachten Ausführungen und umgekehrt in entsprechender Weise.

Auch hinsichtlich der Vorteile des erfindungsgemäßen Systems wird auf die zu dem erfindungsgemäßen Verfahren und der erfindungsgemäßen Steuereinrichtung beschriebenen Vorteile verwiesen.

Mit dem vorgeschlagenen Verfahren, der vorgeschlagenen Steuereinrichtung sowie dem vorgeschlagenen System ergeben sich unter anderem die folgenden Vorteile:

- Die genaue Datenhaltung der Netzbetriebsmittel und Modellierung des Netzes ist für die Netzbetreiber in der Niederspannungsebene oft sehr aufwendig. Erfindungsgemäß wird eine solche Modellierung des Niederspannungsnetzes nicht mehr benötigt.

- Im laufenden Betrieb wird keine Kommunikation mit den Messgeräten im Teilnetz benötigt. Damit kann die Zustandsschätzung auch in Energieversorgungsnetzen eingesetzt werden, bei denen die Kommunikation der Messgeräte aus dem Teilnetz mit einem übergeordneten Managementsystem nicht über die dezentrale Steuereinrichtung (z.B. in einer Ortsnetzstation / einem Kabelverteilerschrank) erfolgt (stattdessen z.B. über Mobilfunkverbindungen wie GPRS, Narrowband-Internet of Things) oder bei denen die Kommunikationsintervalle der Messgeräte zu groß sind, um sie für regelungstechnische Zwecke zu nutzen.

- In der Variante 1 des Trainings ist nur eine normierte Schnittstelle notwendig, über die die Gewichtungsmatrizen zwischen der zentralen Datenverarbeitungseinrichtung und der dezentralen Steuereinrichtung ausgetauscht wird. Diese ist unabhängig von den IT-Systemen der Netzbetreiber. Im Fall der Variante 2 des Trainings ist eine solche Schnittstelle nicht erforderlich.

- Im Betrieb bedarf die Zustandsschätzung keiner zusätzlichen elektrischen Messinformationen. Hier werden die Zusammenhänge zwischen den Lasten/Erzeugungen und den exogenen Eingangssignalen (z.B. Temperatur) genutzt.

- Im Vergleich zu einer zentralen Lösung ist die vorgeschlagene Lösung nicht anfällig für Störungen der Kommunikation zwischen der dezentralen Steuereinrichtung (z.B. Ortsnetzstation) und einem übergeordneten Leitsystem. Nach dem Training kann die dezentrale Steuereinrichtung autark arbeiten, wenn die exogenen Eingangssignale lokal ermittelt werden.

- Da die Vorwärtsberechnung (Berechnung von Zustandswerten aus Eingangssignalen) eines trainierten künstlichen mathematischen Systems einen sehr geringen Rechenaufwand benötigt, eignet sich das Verfahren auch zur Implementierung auf kleinen, kostengünstigen Automatisierungsgeräten mit geringen Rechenkapazitäten.

- Optional findet eine Selbstüberwachung statt und es wird regelmäßig die Ergebnisgüte durch einen Vergleich von aktuell vorliegenden Messinformationen und den berechneten Werten ermittelt.

- Geringer Konfigurationsaufwand bei der Inbetriebsetzung, weil keine Netzmodelldaten benötigt werden und darüber hinaus keine zusätzliche Messsensorik im Teilnetz installiert werden muss.

- Im Falle einer zentralen Datenverarbeitungseinrichtung kann diese sowohl als eigenständiger Cloud-Service als auch als Erweiterung eines Datenmanagementsystems ausgeführt werden. Im Falle einer zentralen Datenverarbeitungseinrichtung in Form eines Cloud-Services kann der Netzbetreiber bei Bedarf auf ein bereitgestelltes System eines Drittanbieters zurückgreifen und vermeidet damit Pflege- und Anschaffungsaufwand für die zentrale Datenverarbeitungseinrichtung.

Die Erfindung wird nachfolgend anhand eines Ausführungsbeispiels näher erläutert. Die spezifische Ausgestaltung des Ausführungsbeispiels ist für die allgemeine Ausgestaltung des erfindungsgemäßen Verfahrens und der erfindungsgemäßen Einrichtung bzw. des erfindungsgemäßen Systems in keiner Weise einschränkend zu verstehen. Der Schutzumfang wird durch die Ansprüche festgelegt.

Hierzu zeigen

Figur 1      eine schematische Darstellung eines elektrischen Energieversorgungsnetzes mit zwei Teilnetzen mit Quellen und/oder Lasten;

Figur 2      eine schematische Darstellung eines Teilnetzes mit einer dezentralen Steuereinrichtung;

Figur 3      eine detailliertere Darstellung der dezentralen Steuereinrichtung;

Figur 4      einen Abschnitt eines Teilnetzes mit für mehrere Netzknoten schematisch dargestellten Spannungen;

Figur 5      einen Abschnitt eines Teilnetzes mit ausschließlicher Stromentnahme an den Netzknoten mit für mehrere Leitungsabschnitte dargestellten Strömen;

Figur 6  einen Abschnitt eines Teilnetzes mit ausschließlicher Stromeinspeisung an den Netzknoten mit für mehrere Leitungsabschnitte dargestellten Strömen;

Figur 7  einen Abschnitt eines Teilnetzes mit gemischter Stromentnahme und Stromeinspeisung an den Netzknoten;

Figur 8  ein System mit einer dezentralen Steuereinrichtung und einer zentralen Datenverarbeitungseinrichtung; und

Figur 9  ein Ablaufschema zur Erläuterung der Vorgehensweise beim Trainieren eines künstlichen neuronalen Netzes mittels eines zweiten neuronalen Netzes auf einer zentralen Datenverarbeitungseinrichtung.

In den Figuren verwendete identische Bezugszeichen bezeichnen dabei übereinstimmende oder vergleichbare Merkmale.

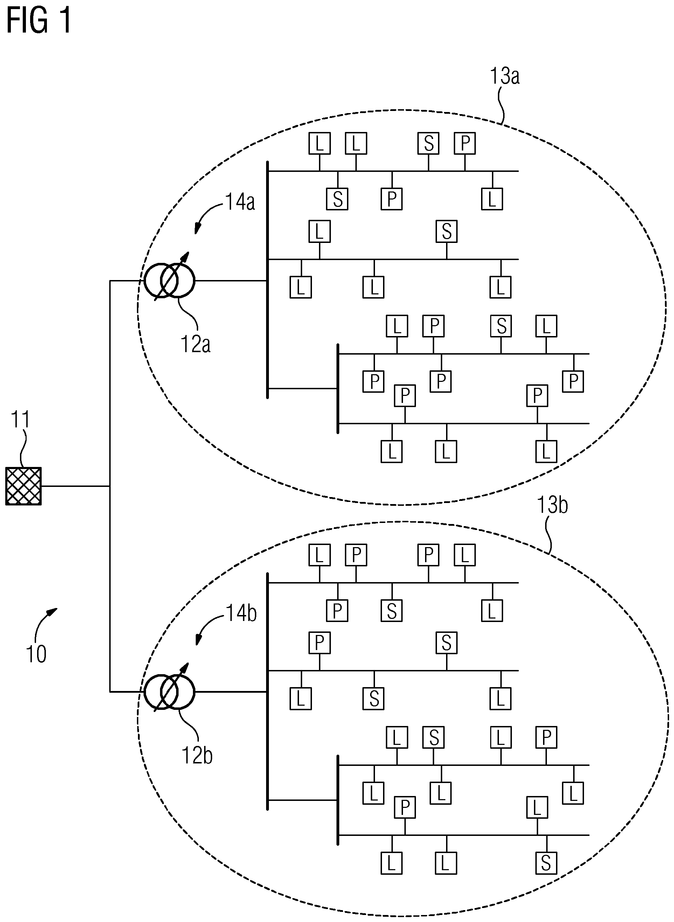

Figur 1 zeigt in schematischer Darstellung ein elektrisches Energieversorgungsnetz 10. Mit einem in Figur 1 nur angedeuteten Mittelspannungsnetz 11 sind über Transformatoren 12a, 12b, die lediglich beispielhaft als regelbare Transformatoren ausgeführt sind, zwei Teilnetze 13a, 13b verbunden, in denen sich jeweils elektrische Lasten L, elektrische Quellen S sowie kombinierte elektrische Lasten und Quellen P (auch als "Prosumer" bezeichnet) befinden. Elektrische Quellen können beispielsweise dezentrale Energieerzeuger in Form von Windkraftanlagen, Photovoltaikanlagen (PV), Biomassekraftwerken, Blockheizkraftwerken etc. sein. Unter Prosumern sollen kombinierte Lasten und Quellen verstanden werden, also beispielsweise Haushalte mit PV-Modulen zur Stromerzeugung. Prosumer werden nachfolgend sowohl als Lasten als auch als Quellen behandelt. Die Teilnetze 13a, 13b können beispielsweise auf der Niederspannungsebene des Energieversorgungsnetzes 10 liegen. Selbstverständlich sind auch andere Netztopologien als die in Figur 1 dargestellte möglich, insbesondere kann die Anzahl von Teilnetzen beliebig sein und von den in Figur 1 dargestellten zwei Teilnetzen abweichen.

Die Verbindungsstellen 14a, 14b bzw. Übergabepunkte zwischen dem Mittelspannungsnetz 11 und den Teilnetzen 13a, 13b stellen Unterstationen dar und werden häufig auch als Ortsnetzstationen bezeichnet. Sie umfassen die regelbaren Transformatoren 12a, 12b.

Um den Betrieb der Teilnetze 13a, 13b regeln zu können und insbesondere ungewünschten Betriebszuständen, wie z.B. Spannungsschwankungen oder Stromüberlasten, entgegenwirken zu können, sind an den Verbindungsstellen 14a, 14b dezentrale Steuereinrichtungen vorgesehen. Mit diesen können in Abhängigkeit von dem aktuellen Betriebszustand des jeweiligen Teilnetzes 13a, 13b Steuersignale erzeugt werden, die beispielsweise zur Ansteuerung der regelbaren Transformatoren (z.B. zur Optimierung der Stellung eines Stufenschalters) oder zum Zu- oder Abschalten von (in Figur 1 nicht dargestellten) Kondensatorbatterien verwendet werden können. Diese Maßnahmen werden unter anderem zur Spannungsblindleistungskompensation in den Teilnetzen 13a, 13b eingesetzt.

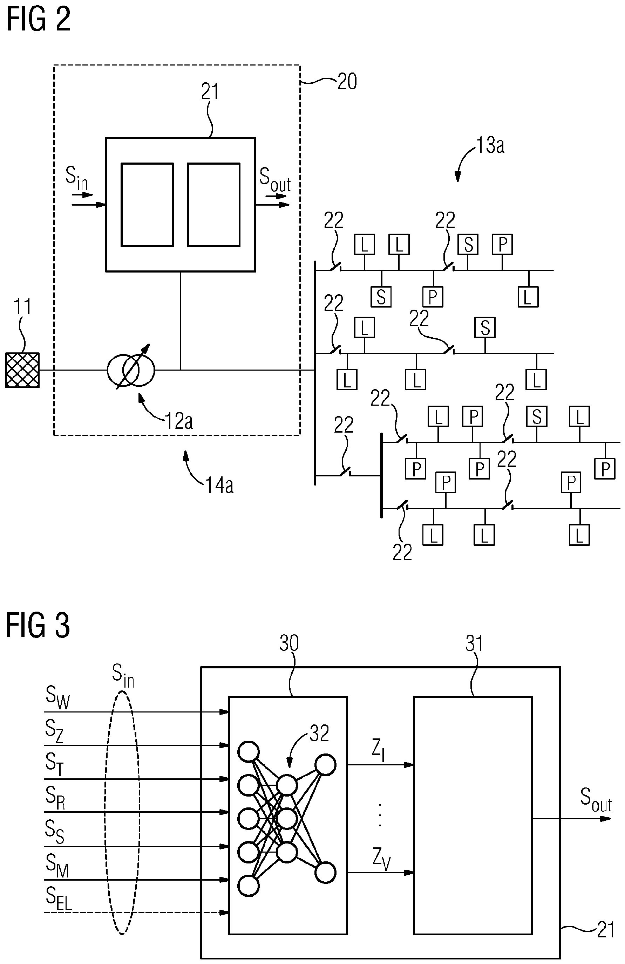

Figur 2 zeigt beispielhaft die Verbindungsstelle 14a zwischen dem Teilnetz 13a und dem Mittelspannungsnetz 11 in genauerer Darstellung. Der Aufbau der Verbindungsstelle 14b kann vergleichbar sein. An der Verbindungsstelle 14a kann beispielsweise eine in Figur 2 durch eine gestrichelte Linie angedeutete Ortsnetzstation 20 vorgesehen sein, die den Transformator 12a und eine dezentrale Steuereinrichtung 21 aufweist.

Die dezentrale Steuereinrichtung 21 ist dazu eingerichtet, unter Verwendung von Eingangssignalen $S_{in}$ Steuersignale $S_{out}$ zu bilden, die zur Steuerung von Komponenten des Teilnetzes verwendet werden können. Die Steuersignale $S_{out}$ können hierzu beispielsweise dem regelbaren Transformator 12a zugeführt werden, um eine Stellung seines Stufenschalters zu verändern und so die Spannung in dem Teilnetz 13a zu beeinflussen.

In Figur 2 sind außerdem Schalteinrichtungen 22 angedeutet, die sich in dem Teilnetz 13a befinden. Bei den Schalteinrichtungen 22 kann es sich um manuell oder automatisch schaltbare Schalter oder um Sicherungen handeln. Der Schaltzustand der Schalteinrichtungen 22 beeinflusst die Topologie des Teilnetzes 13a und die Stromflüsse in dem Teilnetz 13a, z.B. indem Abschnitte des Teilnetzes vom übrigen Teilnetz 13a getrennt oder mit diesem verbunden werden.

Figur 3 zeigt die Steuereinrichtung 21 in detaillierterer Darstellung. Die Steuereinrichtung 21 umfasst eine Zustandsschätzeinrichtung 30 und eine Auswerteinrichtung 31. In der Zustandsschätzeinrichtung 31 ist ein in Figur 3 höchstschematisch und lediglich beispielhaft angedeutetes künstliches mathematisches System 32 in Form eines neuronalen Netzes implementiert. Das neuronale Netz 32 ist dazu trainiert, unter Verwendung der Eingangssignale $S_{in}$ Zustandswerte $Z_I$ und $Z_V$ zu schätzen, die einen elektrischen Betriebszustand des Teilnetzes 13a angeben. Bei den Zustandswerten handelt es sich um Knotenspannungen $Z_V$ an den Knoten des Teilnetzes 13a und/oder auf den Leitungen des Teilnetzes 13a fließende Leitungsströme $Z_I$. Die Zustandswerte $Z_I$, $Z_V$ werden der Auswerteinrichtung 32 zugeführt, die eine Überprüfung durchführt, ob die Zustandswerte $Z_I$, $Z_V$ auf einen ungewünschten Betriebszustand des Teilnetzes 13a hindeuten. Ein solcher ungewünschter Zustand kann beispielsweise anhand von Spannungsschwankungen erkannt werden, bei denen ein oder mehrere Knotenspannungen außerhalb des erlaubten Spannungsbandes liegen. Sofern ein ungewünschter Betriebszustand vorliegt, erzeugt die Auswerteinrichtung 31 ein Hinweissignal, aus dem z.B. die Steuersignale $S_{out}$ zur Ansteuerung von Komponenten des Teilnetzes 13a, wie beispielsweise dem regelbaren Transformator 12a, abgeleitet werden können.

Bei den Eingangssignalen $S_{in}$ kann es sich um eines oder mehrere der folgenden Signale handeln:

- ein das aktuelle Wetter im Bereich des Teilnetzes 13a angebendes Wettersignal $S_W$; ein solches Wettersignal kann beispielsweise Informationen über Sonneneinstrahlung (Helligkeit und Einstrahlungswinkel), Windrichtung, Windgeschwindigkeit, Umgebungstemperatur etc. umfassen;

- ein die aktuelle Uhrzeit angebendes Zeitsignal $S_Z$;

- ein die Art des aktuellen Tages angebendes Tagesartsignal $S_T$; ein solches Tagesartsignal kann beispielsweise angeben, ob es sich um einen Wochentag, einen Samstag, einen Sonntag, einen Feiertag, einen Arbeitstag etc. handelt;

- ein eine Erzeugungs- und/oder Verbrauchscharakteristik zumindest einer typischen Quelle und/oder Last in dem Teilnetz (13a) angebendes Referenzsignal $S_R$;

- ein einen Schaltzustand der Schalteinrichtungen 22 im Teilnetz 13a angebendes Schaltzustandssignal $S_S$; ein solches Schaltzustandssignal kann beispielsweise angeben, ob ein manuell oder automatisch bedienbarer Schalter oder eine Sicherung aktuell den Strom leitet oder unterbricht;

- optional ein eine Betriebsart des künstlichen neuronalen Netzes vorgebendes Modussignal $S_M$.

Zur Erfassung der Eingangssignale kann die Steuereinrichtung 21 beispielsweise mit lokalen Sensoren (z.B. Sensoren zum Bestimmen von Wetterinformationen im Bereich des Teilnetzes) verbunden sein. Alternativ können alle oder einige Eingangssignale auch von externen Serviceanbietern (z.B. Wetterdiensten) übernommen werden. Dazu kann die Steuereinrichtung 21 mit einer geeigneten Kommunikationseinrichtung ausgestattet sein, um z.B. über ein TCP/IP-Netzwerk eine Internetverbindung herzustellen oder über ein Modem eine Telefonverbindung aufzubauen.

Neben den exogenen Eingangssignalen kann auch vorgesehen sein, dem künstlichen neuronalen Netz 32 Messwerte $S_{EL}$ elektrischer Größen zuzuführen, die an einem Übergabepunkt (z.B. der Ortsnetzstation), an einem oder mehreren Verteilpunkten und/oder an im Rahmen einer Netzplanung als besonders wesentlich angesehenen Stellen im Teilnetz 13a erfasst worden sind.

Das optionale Modussignal $S_M$ gibt bei einem entsprechend eingerichteten neuronalen Netz an, in welcher Betriebsart das neuronale Netz betrieben werden soll.

In einer ersten Betriebsart erzeugt das künstliche neuronale Netz aus den exogenen Eingangssignalen als Zustandswerte Knotenspannungen und Leitungsströme, ohne dabei auf elektrische Messwerte zurückzugreifen. Diese Betriebsart bietet sich insbesondere dann an, wenn keine Strom- bzw. Spannungsmessung in einem Übergabepunkt (z.B. der Ortsnetzstation) zur Verfügung steht. Diese erste Betriebsart kann daher z.B. genutzt werden, wenn entweder zum Zeitpunkt der Zustandsschätzung die Übertragung von Messwerten von einem eine Strom- bzw. Spannungsmessung durchführenden Messgerät gestört ist oder wenn die Zustandsschätzung als Prognose einen Status des Teilnetzes für einen in der Zukunft liegenden Zeitpunkt berechnen soll.

In einer zweiten Betriebsart stehen dem künstlichen neuronalen Netz zusätzlich zu den exogenen Eingangssignalen auch elektrische Messwerte vom Übergabepunkt des Teilnetzes zur Verfügung. In dieser Betriebsart ermittelt das neuronale Netz aus den Eingangssignalen und den elektrischen Messwerten lediglich die Knotenspannungen für das Teilnetz 13a.

Das künstliche neuronale Netz kann hierbei so eingerichtet sein, dass es beide Betriebsarten umschaltbar bereitstellen kann. Die Betriebsarten können dabei durch dieselbe Netzstruktur bereitgestellt werden, die lediglich unterschiedlich konfiguriert ist. Alternativ kann das neuronale Netz auch zwei Sub-Netze aufweisen, die jeweils für eine Betriebsart eingerichtet sind. In diesem Fall aktiviert das neuronale Netz entsprechend der Vorgabe durch das Betriebsartsignal $S_M$ das jeweils entsprechende Sub-Netz.

Alternativ kann das neuronale Netz als zwei voneinander unabhängige neuronale Netze ausgeführt werden und die jeweils einen der beiden Modi bedienen.

Die dezentrale Steuereinrichtung 21 ist auf diese Weise dazu eingerichtet, eine dezentrale Erkennung von unzulässigen Betriebszuständen des Teilnetzes 13a des Energieversorgungsnetzes, insbesondere von Spannungsbandverletzungen und Stromüberlastungen in Segmenten des Teilnetzes 13a, durchzuführen. Dazu wird das künstliche neuronale Netz 32 eingesetzt. Dieses ist unmittelbar mit Hilfe von Daten trainiert worden, die mittels Messgeräten, z.B. intelligenten Zählern, im Energieversorgungsnetz erfasst worden sind. Auf die Beschreibung des Teilnetzes 13a mit Hilfe von analytischen Datenmodellen kann dabei verzichtet werden. Moderne intelligente Zähler liefern neben den eigentlichen Energiemesswerten auch Kenngrößen wie Spannungsbeträge, Wirkleistung (jeweils Einspeisung und Bezug), Blindleistung (jeweils Einspeisung und Bezug), Frequenz, Spannung, Strom und Phasenwinkel etc., und senden diese an ein zentrales Zählerdatenmanagementsystem. Vorliegend werden solche elektrischen Messwerte aus dem Teilnetz 13a als Trainingsdaten zum Anlernen des neuronalen Netzes verwendet. Dabei ist es möglich, die künstlichen neuronalen Netze zur Erkennung eines Spannungsprofils ohne Kenntnis der Topologie des Teilnetzes 13a zu nutzen.

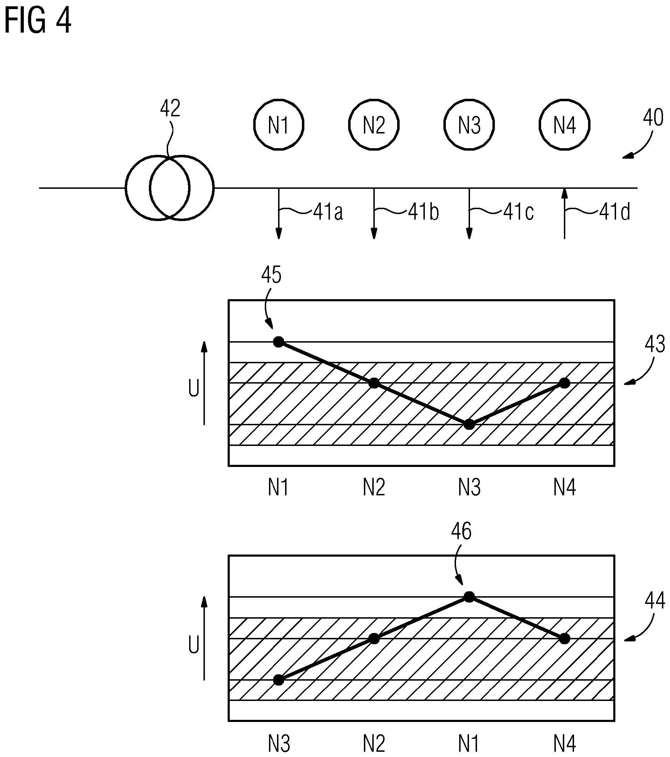

Das in Figur 4 dargestellte Beispiel eines einfachen Radialnetzes 40 mit vier Netzknoten N1,... N4 soll die zugehörigen Grundüberlegungen verdeutlichen. Im vorliegenden Beispiel findet an den Netzknoten N1-N3 eine Entnahme elektrischer Energie statt, während am Netzknoten N4 elektrische Energie eingespeist wird. Dies ist durch Pfeile 41a-d angedeutet. Das Radialnetz 40 wird über einen Transformator 42 einer Ortsnetzstation gespeist. Zur Darstellung eines Spannungsprofils entlang der Netzknoten N1-N4 werden üblicherweise die Spannungsbeträge auf der y-Achse gegen die Knoten-Nummern auf der x-Achse aufgetragen. Im Allgemeinen werden die Spannungsprofile dabei so dargestellt, dass der Verlauf des Spannungsprofils mit dem topologischen Verlauf der Leitung übereinstimmt. Dies ist in Figur 4 für das beispielhaft dargestellte Radialnetz 40 schematisch im Diagramm 43 angedeutet. Zur Erkennung und Behebung einer Spannungsbandverletzung ist es jedoch nicht unbedingt notwendig zu wissen, an welchem Netzknoten N1-N4 die Spannungsbandverletzung vorliegt; es reicht hingegen völlig aus, die Höhe der Verletzung zu kennen und zu wissen, dass sie überhaupt existiert. Die heute üblichen Verfahren zur Korrektur von Spannungsbandverletzungen, zum Beispiel durch Verstellung eines Stufenschalters eines regelbaren Ortsnetztransformators, erreichen durch Erhöhung der sekundärseitigen Spannungsstufe eine Erhöhung der Spannung im gesamten darunter liegenden Netzbereich und benötigen daher die Kenntnis des topologischen Ortes nicht. Deshalb kann zum Zweck der Spannungsregelung sowohl das nach Netztopologie sortierte Spannungsprofil (siehe Diagramm 43) als auch ein beliebig umsortiertes Spannungsprofil, beispielsweise entsprechend des Diagramms 44, verwendet werden. In beiden Fällen erkennt man eine Verletzung des durch den gestrichelten Bereich angedeuteten Spannungsbandes durch die Knotenspannungen 45 bzw. 46. Die Kenntnis, wo genau der von der Verletzung betroffene Netzknoten liegt, ist für die Durchführung einer Regelung zur Behebung der Spannungsbandverletzung nicht notwendig. Daher kann anhand der von dem künstlichen neuronalen Netz anhand der Eingangssignale ausgegebenen Knotenspannungen auf eine Spannungsbandverletzung geschlossen werden und es können entsprechende Gegenmaßnahmen eingeleitet werden.

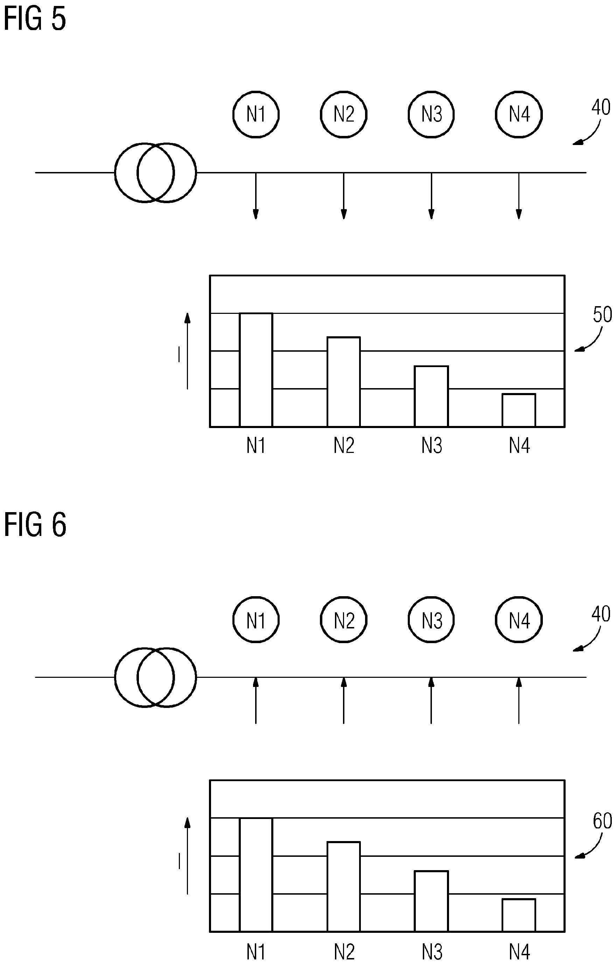

Selbst für die Erkennung von Stromüberlasten kann auf die Kenntnis der genauen Topologie des Teilnetzes 13a verzichtet werden, wie die folgenden Überlegungen zeigen: Zunächst sei gemäß Figur 5 das beispielhafte Radialnetz 40 betrachtet, an dessen Netzknoten N1,... N4 in einem ersten Fall nur Lasten angeschlossen sind. Die sich ergebende Strombelastung einer solchen Leitung entspricht schematisch der in Figur 5 im Diagramm 50 gezeigten Darstellung. Eine vergleichbare Strombelastung stellt sich ein, wenn gemäß einem in Figur 6 dargestellten zweiten Fall nur Einspeisungen an dem Radialnetz 40 angeschlossen sind, wie es in Diagramm 60 schematisch angedeutet ist. In beiden Fällen, sowohl Fall 1 gemäß Figur 5 als auch Fall 2 gemäß Figur 6, wird das Maximum des Stromes am Übergabepunkt des Teilnetzes, z.B. an der Ortsnetzstation, erreicht. Daher ist es bei solchen einfachen Netzen mit einer ausschließlichen Einspeisung bzw. Entnahme elektrischer Energie anhand der maximalen Leitungsströme erkennbar, ob eine Überlastsituation vorliegt oder nicht. Durch das entsprechend trainierte künstliche neuronale Netz 32 werden die Leitungsströme entsprechend den Eingangssignalen ausgegeben, so dass - unabhängig von einer Kenntnis über die Topologie des Teilnetzes 13a - anhand des maximalen Leitungsstroms eine etwaige Überlastsituation erkannt und entsprechende Gegenmaßnahmen eingeleitet werden können.

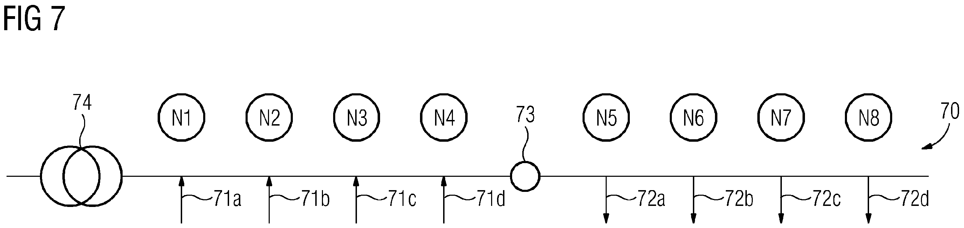

Einen komplizierteren Fall bilden Teilnetze, in denen sowohl Einspeisungen als auch Entnahmen elektrischer Energie stattfinden. Aufgrund der verbreiteten Installation von regenerativen Energieerzeugungsanlagen und entsprechender dezentraler Einspeisung elektrischer Energie auch auf unteren Spannungsebenen stellt diese Form eines Teilnetzes mittlerweile den üblichen Fall dar. In Figur 7 ist hierzu ein weiteres Beispiel eines Radialnetzes 70 mit acht Netzknoten N1,... N8 gezeigt. Das beispielhaft dargestellte Radialnetz 70 weist sowohl Einspeisungen 71a-d als auch Entnahmen 72a-d elektrischer Leistung auf. Daher ist es denkbar, dass es entlang des Leitungszuges zu einer Stromüberlast kommt. Der Einfachheit halber sei angenommen, dass die Lasten in den Knoten N5-N8 eine Überlast des Zweiges 73 verursachen, die von den Einspeisungen in den Knoten N1-N4 bzw. der Ortsnetzstation 74 versorgt wird. Ohne Kenntnisse der Topologie ist es zunächst nicht ohne Weiteres möglich, auf die Überlast des konkreten Zweiges 74 zu schließen, weil die Bilanzen der Ströme in den Knoten N4 und N5 nicht gebildet werden können. Allerdings dürfte es den üblichen Fall darstellen, dass genau dieser Zweig 74 mit einer Sicherung hinter dem Knoten N4 bzw. vor dem Knoten N5 geschützt wird. Im Zuge der Netzplanung wird der Netzbetreiber den Zweig 74 nämlich als eine wesentliche Stelle für die Sicherheit des Teilnetzes 13a einstufen, da er die hier potentiell auftretende Überlastsituation erkennt. Entsprechend wird er dort eine Sicherung bzw. einen Leistungsschalter vorsehen. Damit können für solche Netzsituationen an dieser Stelle zusätzliche Messungen vorgenommen werden, die analog zur Messung der Ströme an dem Übergabepunkt (Ortsnetzstation) bzw. einem Verteilpunkt (z.B. Kabelverteilerschrank) zu sehen sind. Die oben angestellten Überlegungen lassen sich verallgemeinern für beliebig ausgestaltete Teilnetze mit sowohl Entnahmen als auch Einspeisungen elektrischer Energie: überall dort, wo potentielle Stromüberlasten entstehen können, werden prinzipiell Einbauorte für die Installation von Messgeräten vorhanden sein.

Um Knotenspannungen und/oder Leitungsströme im Teilnetz 13a anhand der exogenen Eingangssignale schätzen zu können, muss das neuronale Netz 32 entsprechend trainiert werden. Für den Trainingsvorgang werden dem neuronalen Netz Paare von Eingangs- und Ausgangsvektoren bereitgestellt, die an einander entsprechenden Zeitpunkten aufgenommen worden sind. Die Ausgangsvektoren werden hierbei unmittelbar durch Knotenspannungen und/oder Leitungsströme gebildet, die mit elektrischen Messgeräten, z.B. Energiezählern oder Smart Metern, im Teilnetz erfasst worden sind. Nachdem das Training des neuronalen Netzes 32 abgeschlossen ist, liegt die Matrix der Gewichtungsfaktoren des künstlichen neuronalen Netzes 32 fest. Diese Matrix wird von dem neuronalen Netz übernommen und für die folgenden Abschätzungen der Zustandswerte verwendet. Somit liegt ein trainiertes künstliches neuronales Netz vor, welches für die Zustandsschätzung des Teilnetzes 13a vorbereitet ist. Die dezentrale Steuereinrichtung kann z.B. aus einem kleinen Automatisierungsgerät bestehen, das z.B. auf der Basis eines industriellen PCs ausgebildet ist.

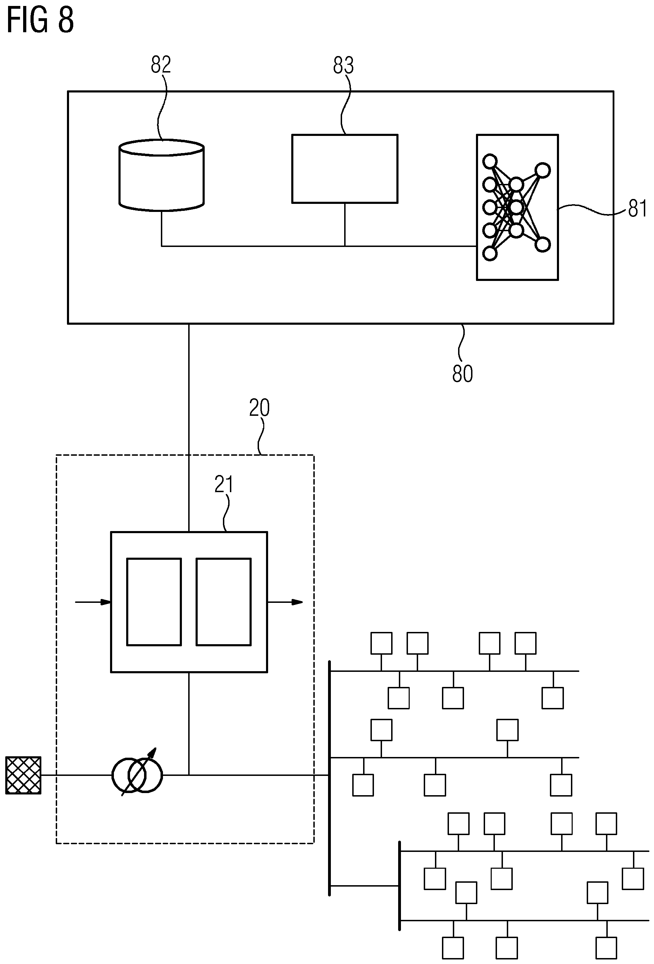

Das Training des neuronalen Netzes 32 kann beispielsweise direkt in der dezentralen Steuereinrichtung vorgenommen werden. Alternativ kann das Training nicht in der dezentralen Steuereinrichtung 21 selbst durchgeführt werden, sondern in einer mit der Steuereinrichtung verbundenen zentralen Datenverarbeitungseinrichtung 80 stattfinden (vgl. Figur 8). Hierzu weist die zentrale Datenverarbeitungseinrichtung 80 ebenfalls ein neuronales Netz 81 auf ("zweites neuronales Netz"), dessen Struktur mit der des neuronalen Netzes 32 der dezentralen Steuereinrichtung 21 übereinstimmt. Außerdem umfasst die zentrale Datenverarbeitungseinrichtung 80 ein Archivsystem 82, in dem historische Eingangssignale gespeichert sind, und eine Recheneinrichtung 83, die eine Datenaufbereitung durchführt, bei der die Eingangs- und Ausgangsvektoren zusammenführt und daraus die Trainingsdaten generiert werden.

Mit der zentralen Datenverarbeitungseinrichtung 80 wird das zweite neuronale Netz 81 derart trainiert, dass es mit zu dem fraglichen Teilnetz 13a passenden Eingangssignalen den jeweils resultierenden Netzzustand beschreibende Zustandswerte in Form von Knotenspannungen und/oder Leitungsströmen bildet. Die während dieser Trainingsphase ermittelten Trainingsparameter werden daraufhin an die dezentrale Steuereinrichtung 21 übertragen und dort von der Zustandsschätzeinrichtung 30 für das neuronale Netz 32 als Trainingsparameter übernommen. Somit wird dem neuronalen Netz 32 dasselbe Verhalten eingeprägt, das dem zweiten neuronalen Netz antrainiert worden ist.

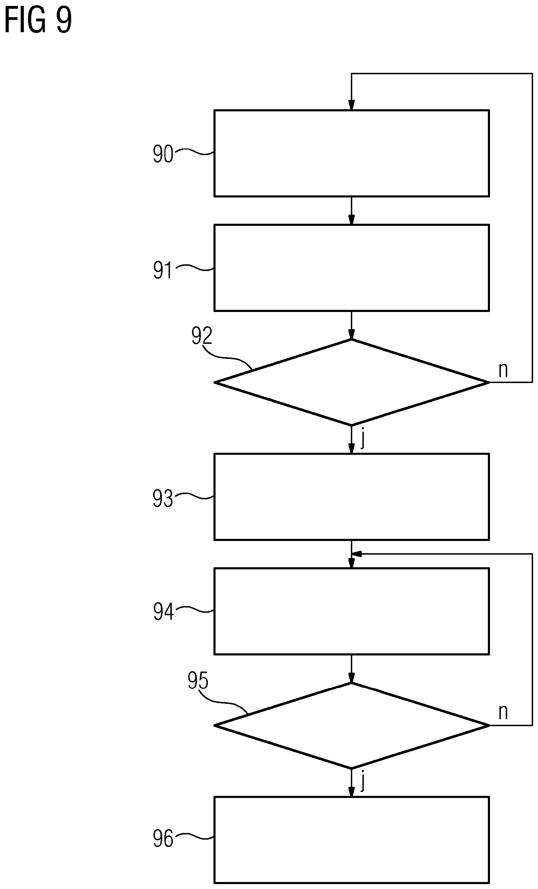

Figur 9 zeigt hierzu ein Ablaufschema, mit dem die Vorgehensweise beim Training des zweiten neuronalen Netzes 81 und der Übernahme der Trainingsparameter durch das neuronale Netz 32 der dezentralen Steuereinrichtung 21 erläutert wird. Dabei werden auf der Basis der von dem Archivsystem 82 bereitgestellten Eingangssignale (z.B. archivierten Wetterinformationen und Messwerten elektrischer Parameter) und der zugehörigen, mit den Messgeräten im Teilnetz erfassten Zustandswerte die Trainingsparameter für das zweite neuronale Netz 81 berechnet. Dazu werden für das Teilnetz 13a die folgenden Schritte durchlaufen:
In einem ersten Schritt 90 wird ein Betrachtungszeitraum (z.B. ein bestimmter Tag oder eine bestimmte Zeitspanne innerhalb eines Tages) aus dem Archivsystem 82 ausgewählt. Anhand der für den ausgewählten Betrachtungszeitraum und das fragliche Teilnetz 13a archivierten Eingangssignale werden in Schritt 91 unter Hinzunahme der durch Messung ermittelten elektrischen Zustände (Leitungsströme, Knotenspannungen) der elektrischen Lasten in dem Teilnetz 13a Paare von zeitlich zueinander gehörenden Eingangs- und Ausgangsvektoren gebildet.

In Schritt 92 wird daraufhin geprüft, ob bereits alle für das Teilnetz 13a in dem Archivsystem gespeicherten Betrachtungszeiträume verwendet worden sind. Falls dies noch nicht der Fall ist, wird in Schritt 90 einer der noch nicht verwendeten Betrachtungszeiträume ausgewählt und es werden in Schritt 91 für diesen Betrachtungszeitraum entsprechende weitere Paare von Eingangs- und Ausgangsvektoren gebildet. Falls in Schritt 92 festgestellt wird, dass bereits alle gespeicherten Betrachtungszeiträume verwendet worden sind, wird das Verfahren bei Schritt 93 fortgesetzt.

Als Ergebnis der vorigen Durchläufe liegt in Schritt 93 eine Sammlung von Daten vor, die aus Eingangsvektoren mit Eingangssignalen und dazu passenden Ausgangsvektoren mit Zustandswerten bestehen. Diese Eingangssignale und dazu passenden Zustandswerte werden in einem folgenden Schritt 94 zum Training des zweiten neuronalen Netzes 81 verwendet. In Schritt 95 wird daraufhin geprüft, ob das Training des zweiten neuronalen Netzes bereits derart fortgeschritten ist, dass es zu den Eingangssignalen hinreichend genau passende Zustandswerte ermittelt. Ist dies nicht der Fall, werden die festgestellten Abweichungen zwischen den berechneten Zustandswerten und den gewünschten Zustandswerten erneut in Schritt 94 zum Training des zweiten neuronalen Netzes 81 eingespielt ("Backpropagation"). Während des Trainings werden Trainingsparameter des zweiten neuronalen Netzes 81 angepasst.

Wird in Schritt 95 hingegen eine zufriedenstellende Übereinstimmung der mit dem trainierten zweiten neuronalen Netz 81 ermittelten Zustandswerte mit den gewünschten Zustandswerten festgestellt, so ist das Training des zweiten neuronalen Netzes 81 abgeschlossen. In Schritt 96 werden daraufhin die in der Trainingsphase (Schritte 94 und 95) ermittelten Trainingsparameter an das neuronale Netz 32 der dezentralen Steuereinrichtung 21 übermittelt und dort importiert. Damit wird dem neuronalen Netz 32 dasjenige Verhalten aufgeprägt, das das zweite neuronale Netz 81 in der Trainingsphase erlernt hat.

Das beschriebene Training kann von der zentralen Datenverarbeitungseinrichtung 80 in entsprechender Weise auch für andere dezentrale Steuereinrichtungen 21 durchgeführt werden. Dabei ist darauf zu achten, dass beim Training des zweiten neuronalen Netzes immer die zu dem fraglichen Teilnetz passenden Eingangssignale und Zustandswerte verwendet werden.

Die zentrale Datenverarbeitungseinrichtung 80 kann hierzu beispielsweise auch von einem Serviceanbieter z.B. als Cloud-Service betrieben werden.

Mit den entweder direkt in der dezentralen Steuereinrichtung ermittelten oder von der zentralen Datenverarbeitungseinrichtung 80 erhaltenen Trainingsparametern kann daraufhin das neuronale Netz 32 betrieben werden. Auf diese Weise kann die dezentrale Steuereinrichtung 21 mittels der Zustandsschätzeinrichtung 30 anhand von aktuellen Eingangssignalen einen aktuellen Betriebszustand des Teilnetzes beschreibende Zustandswerte ermitteln. Diese bilden daraufhin die Basis für eine in der Auswerteinrichtung 31 durchgeführte Überprüfung, ob ein ungewünschter Betriebszustand vorhanden oder in Sicht ist. Ist dies der Fall, erzeugt die Auswerteinrichtung 31 ein Hinweissignal, das dem Betreiber des Teilnetzes 13a den ungewünschten Betriebszustand anzeigt. Außerdem können bei Vorliegen des Hinweissignals geeignete Steuersignale erzeugt werden, um dem ungewünschten Betriebszustand entgegenzuwirken.

Im Betrieb kann die dezentrale Steuereinrichtung, sofern in dem Teilnetz 13a Sensoren zur Erfassung von elektrischen Parametern vorhanden sind, eine Prüfung durchführen, ob die mittels des neuronalen Netzes geschätzten Zustandswerte hinreichend genau mit den durch Messung ermittelten Zustandswerten übereinstimmen. Ist dies nicht der Fall, kann eine erneute Trainingsphase angestoßen werden, um das neuronale Netz 32 der dezentralen Steuereinrichtung 21 durch Erzeugung und Übernahme neuer Trainingsparameter an etwaige Veränderungen im Verhalten des Teilnetzes 13a anzupassen.

In einem realen Teilnetz werden die Messgeräte, z.B. die intelligenten Zähler, regelmäßig ausgetauscht. Dabei muss darauf geachtet werden, dass die Knotenspannungsinformationen der neuen Zähler an die richtige Position der zum Training des neuronalen Netzes verwendeten Ausgangsmatrix geschrieben werden. Um den konstanten Aufbau der Matrix zu gewährleisten, können zwei Verfahren eingesetzt werden: Zur Verwaltung der Messgerätedaten wird nicht die Messgerätenummer, z.B. eine Zählernummer, als Primärschlüssel, sondern ein eigener eindeutiger Schlüssel verwendet, auf den die Messgerätenummer verweist. Beim Austausch eines Messgerätes verweisen so die Messgerätenummer des alten als auch des neuen Messgerätes auf diesen Primärschlüssel. Im Allgemeinen halten die Managementsysteme auch die Daten zum geographischen Einbauort des Messgerätes vor. Der Abstand des Einbauortes zur Ortnetzstation oder zum Kabelverteiler wird als Sortierkriterium für die Anordnung der Knoten in der Matrix genutzt.

Die oben beschriebene Vorgehensweise kann in entsprechender Weise auch auf künstliche mathematische Systeme in Form von Supportvektormaschinen oder ARX-Modellen übertragen werden.

Die Komponenten der dezentralen Steuereinrichtung 21 und der zentralen Datenverarbeitungseinrichtung 40 können als Hardware oder Software oder eine Kombination aus beidem ausgebildet sein.

Obwohl die Erfindung vorstehend im Detail durch bevorzugte Ausführungsbeispiele näher illustriert und beschrieben worden ist, ist die Erfindung nicht durch die offenbarten Beispiele eingeschränkt und andere Variationen können vom Fachmann hieraus abgeleitet werden, ohne den Schutzumfang der nachfolgenden Patentansprüche zu verlassen.

**Patentansprüche**

1. Verfahren zum Ermitteln von Zustandswerten zur Beschreibung von Betriebszuständen in einem Energieversorgungsnetz (10), das ein elektrische Lasten (L) und/oder elektrische Quellen (S) aufweisendes Teilnetz (13a) umfasst, wobei

   - dem Teilnetz (13a) eine dezentrale Steuereinrichtung (21) zugeordnet ist, die eine Zustandsschätzeinrichtung (30) umfasst, mittels der Zustandswerte, die elektrische Spannungen an Knoten des Teilnetzes (13a) und/oder einen elektrischen Strom auf Leitungsabschnitten des Teilnetzes (13a) angeben, unter Verwendung von der Zustandsschätzeinrichtung zugeführten Eingangssignalen geschätzt werden;
   - die Zustandsschätzeinrichtung (30) ein künstliches mathematisches System (32) umfasst, das derart trainiert ist, dass es unter Verwendung der Eingangssignale die Zustandswerte ermittelt, wobei der Zustandsschätzeinrichtung (30) Eingangssignale zugeführt werden, die einen in dem Bereich des Teilnetzes (13a) vorliegenden Umgebungszustand angeben; und
   - die dezentrale Steuereinrichtung (21) eine Auswerteinrichtung (31) umfasst, mittels der die Zustandswerte daraufhin überprüft werden, ob sie auf einen unzulässigen Betriebszustand des Teilnetzes (13a) hinweisen; **dadurch gekennzeichnet, dass**
   - zum Trainieren des künstlichen mathematischen Systems (32) einerseits historische Eingangssignale und andererseits als Zustandswerte unmittelbar solche zeitlich zu den historischen Eingangssignalen gehörende elektrischen Spannungen an Knoten des Teilnetzes (13a) und/oder elektrischen Ströme auf Leitungsabschnitten des Teilnetzes (13a) verwendet werden, die direkt mit an den jeweiligen Knoten und/oder Leitungsabschnitten installierten Messgeräten erfasst worden sind, wobei die Zustandswerte hierfür aus einem Archivsystem entnommen werden, in dem sie nach ihrer Messung gemeinsam mit einer den Zeitpunkt ihrer Messung angebenden Zeitinformation abgespeichert worden sind; und dass
- die Auswerteinrichtung (31) bei Erkennung eines unzulässigen Betriebszustands regelbare Transformatoren ansteuert und/oder Kondensatorbatterien zu- oder abschaltet.

2. Verfahren nach Anspruch 1,
**dadurch gekennzeichnet, dass**

- mittels der dezentralen Steuereinrichtung (21) ein einen unzulässigen Betriebszustand angebendes Hinweissignal erzeugt wird, wenn die Zustandswerte auf einen unzulässigen Betriebszustand hinweisen.

3. Verfahren nach Anspruch 1 oder 2,
**dadurch gekennzeichnet, dass**

- als künstliches mathematisches System (32) ein künstliches neuronales Netz, eine Supportvektormaschine oder ein ARX-Modell verwendet wird.

4. Verfahren nach einem der vorangehenden Ansprüche,
**dadurch gekennzeichnet, dass**

- zum Trainieren des künstlichen mathematischen Systems (32) ein zweites künstliches mathematisches System (41), dessen Struktur mit derjenigen des künstlichen mathematischen Systems (32) der Zustandsschätzeinrichtung (30) übereinstimmt, in einer zentralen Datenverarbeitungseinrichtung (40) unter Bildung von Trainingsparametern angelernt wird, die das Verhalten des zweiten künstlichen mathematischen Systems (41) bestimmen; und
- die Trainingsparameter an das künstliche mathematische System (32) der Zustandsschätzeinrichtung (30) übermittelt und von diesem übernommen werden.

5. Verfahren nach einem der Ansprüche 1 bis 3,
**dadurch gekennzeichnet, dass**

- das künstliche mathematische System (32) in der dezentralen Steuereinrichtung (21) unter Bildung von Trainingsparametern angelernt wird, die das Verhalten des künstlichen mathematischen Systems (41) bestimmen; und
- die Trainingsparameter anschließend von dem künstlichen mathematischen System (32) übernommen werden.

6. Verfahren nach einem der vorangehenden Ansprüche,

**dadurch gekennzeichnet, dass**

- bei Vorliegen eines Hinweissignals ein Steuersignal erzeugt wird, das zur Steuerung mindestens einer Komponente des Teilnetzes (13a) herangezogen wird.

7. Verfahren nach einem der vorangehenden Ansprüche,
**dadurch gekennzeichnet, dass**

- als Eingangssignale ein oder mehrere der folgenden Signale verwendet werden:

- ein das aktuelle Wetter im Bereich des Teilnetzes (13a) angebendes Wettersignal;
- ein die aktuelle Uhrzeit angebendes Zeitsignal;
- ein eine Erzeugungs- und/oder Verbrauchscharakteristik zumindest einer typischen Quelle und/oder Last in dem Teilnetz (13a) angebendes Referenzsignal;
- ein die Art des aktuellen Tages angebendes Tagesartsignal;
- ein einen Schaltzustand von Schalteinrichtungen (22) im Teilnetz (13a) angebendes Schaltzustandssignal.

8. Verfahren nach Anspruch 7,
**dadurch gekennzeichnet, dass**

- das künstliche mathematische System (32) eine erste Betriebsart aufweist, in dem es unter Verwendung der Eingangssignale Zustandssignale in Form von Spannungen an Knoten des Teilnetzes (13a) und elektrischen Strömen auf Leitungsabschnitten des Teilnetzes (13a) erzeugt; und
- das künstliche mathematische System (32) eine zweite Betriebsart aufweist, in dem es unter Verwendung der Eingangssignale und zusätzlichen Messwerten von Strömen und/oder Spannungen an einem Übergabepunkt des Teilnetzes (13a) Zustandssignale ausschließlich in Form von Spannungen an Knoten des Teilnetzes (13a) erzeugt.

9. Verfahren nach Anspruch 8,
**dadurch gekennzeichnet, dass**

- die Betriebsart des künstlichen mathematischen Systems (32) zwischen der ersten Betriebsart und der zweiten Betriebsart umschaltbar ist.

10. Verfahren nach Anspruch 7,
**dadurch gekennzeichnet, dass**

- als Eingangssignale außerdem Messwerte elektrischer Größen verwendet werden, die in einem Übergabe- oder Verteilpunkt des Teilnetzes (13a) oder einer aufgrund einer auf das Teilnetz (13a) bezogenen Netzplanung als für den Betrieb des Teilnetzes (13a) als besonders wesentlich eingestuften Stelle des Teilnetzes (13a) erfasst worden sind.

11. Verfahren nach einem der vorangehenden Ansprüche,
**dadurch gekennzeichnet, dass**

- die Steuereinrichtung (21) mittels der Zustandsschätzeinrichtung (32) ermittelte Zustandswerte im Betrieb des Teilnetzes (13a) mit für ausgewählte Messstellen des Teilnetzes (13a) gemessenen elektrischen Parametern vergleicht; und
- bei einer über einem Toleranzschwellenwert liegenden Abweichung zwischen den Zustandswerten und den elektrischen Parametern ein erneutes Training des künstlichen mathematischen Systems (32) der Zustandsschätzeinrichtung (30) durchgeführt wird.

12. Verfahren nach einem der vorangehenden Ansprüche,
**dadurch gekennzeichnet, dass**

- das Hinweissignal erzeugt wird, wenn anhand zumindest eines der geschätzten Zustandswerte eine Schwellenwertverletzung erkannt wird.

13. Verfahren nach einem der vorangehenden Ansprüche,
**dadurch gekennzeichnet, dass**

- die Eingangssignale dem künstlichen mathematischen System (32) als Eingangsvektor zugeführt werden und die Zustandswerte von dem künstlichen mathematischen System (32) als Ausgangsvektor abgegeben werden, wobei die Sortierung der Zustandswerte in dem Ausgangsvektor unabhängig von der Topologie des Teilnetzes (13a) ist.

14. Verfahren nach einem der vorangehenden Ansprüche,
**dadurch gekennzeichnet, dass**

- die zum Training des künstlichen mathematischen Systems verwendeten elektrischen Spannungen und/oder elektrischen Ströme mit im Teilnetz (13a) installierten elektrischen Energiezählern erfasst worden sind.

15. Dezentrale Steuereinrichtung (21) zum Ermitteln von Zustandswerten zur Beschreibung von Betriebszuständen in einem elektrische Lasten (L) und/oder elektrische Quellen (S) aufweisenden Teilnetz (13a) eines elektrischen Energieversorgungsnetzes (10), wobei

- die dezentrale Steuereinrichtung (21) dem Teilnetz (13a) zugeordnet ist und eine Zustandsschätzeinrichtung (30) umfasst, die dazu eingerichtet ist, Zustandswerte, die elektrische Spannungen an Knoten des Teilnetzes (13a) und/oder einen elektrischen Strom auf Leitungsabschnitten des Teilnetzes (13a) angeben, unter Verwendung von der Zustandsschätzeinrichtung (30) zugeführten Eingangssignalen zu schätzen, die einen in dem Bereich des Teilnetzes (13a) vorliegenden Umgebungszustand angeben;
- die Zustandsschätzeinrichtung (30) ein künstliches mathematisches System (32) umfasst, das dazu trainiert ist, unter Verwendung der Eingangssignale die Zustandswerte zu ermitteln; und
- die dezentrale Steuereinrichtung (21) eine Auswerteinrichtung (31) umfasst, die dazu eingerichtet ist, die Zustandswerte daraufhin zu überprüfen, ob sie auf einen ungewünschten elektrischen Betriebszustand des Teilnetzes (13a) des Energieversorgungsnetzes (10) hinweisen; **dadurch gekennzeichnet, dass**
- die dezentrale Steuereinrichtung (21) dazu eingerichtet ist, zum Trainieren des künstlichen mathematischen Systems (32) einerseits historische Eingangssignale und andererseits als Zustandswerte unmittelbar solche zeitlich zu den historischen Eingangssignalen gehörende elektrischen Spannungen an Knoten des Teilnetzes (13a) und/oder elektrischen Ströme auf Leitungsabschnitten des Teilnetzes (13a) zu verwenden, die direkt mit an den jeweiligen Knoten und/oder Leitungsabschnitten installierten Messgeräten erfasst worden sind, wobei die Zustandswerte hierfür aus einem Archivsystem entnommen werden, in dem sie nach ihrer Messung gemeinsam mit einer den Zeitpunkt ihrer Messung angebenden Zeitinformation abgespeichert worden sind; und dass - die Auswerteinrichtung (31) dazu ausgebildet ist, bei Erkennung eines unzulässigen Betriebszustands regelbare Transformatoren anzusteuern und/oder Kondensatorbatterien zu- oder abzuschalten.

16. Dezentrale Steuereinrichtung nach Anspruch 15,
**dadurch gekennzeichnet, dass**

- die Auswerteinrichtung (31) dazu eingerichtet ist, das Hinweissignal zu erzeugen, falls die Zustandswerte auf einen ungewünschten elektrischen Betriebszustand hinweisen.

**17.** Dezentrale Steuereinrichtung (31) nach Anspruch 15 oder 16,
**dadurch gekennzeichnet, dass**

- die Steuereinrichtung (21) Bestandteil einer dem Teilnetz (13a) zugeordneten Ortsnetzstation (20) ist.

**18.** System zum Ermitteln von Zustandswerten zur Beschreibung von Betriebszuständen in einem elektrische Lasten (L) und/oder elektrische Quellen (S) aufweisenden Teilnetz (13a) eines elektrischen Energieversorgungsnetzes (10), mit

- einer dem Teilnetz (13a) zugeordneten dezentralen Steuereinrichtung (21), die eine Zustandsschätzeinrichtung (30) umfasst, die dazu eingerichtet ist, Zustandswerte, die elektrisehe Spannungen an Knoten des Teilnetzes (13a) und/oder einen elektrischen Strom auf Leitungsabschnitten des Teilnetzes (13a) angeben, unter Verwendung von der Zustandsschätzeinrichtung (30) zugeführten Eingangssignalen zu schätzen, die einen in dem Bereich des Teilnetzes (13a) vorliegenden Umgebungszustand angeben, wobei die Zustandsschätzeinrichtung (30) ein künstliches mathematisches System (32) umfasst, das dazu trainiert ist, unter Verwendung der Eingangssignale die Zustandswerte zu ermitteln; und
- die dezentrale Steuereinrichtung (21) eine Auswerteinrichtung (31) umfasst, die dazu eingerichtet ist, die Zustandswerte daraufhin zu überprüfen, ob sie auf einen ungewünschten elektrischen Betriebszustand des Teilnetzes (13a) des Energieversorgungsnetzes (10) hinweisen, und die Auswerteinrichtung (31) dazu eingerichtet ist, das Hinweissignal zu erzeugen, falls die Zustandswerte auf einen ungewünschten elektrischen Betriebszustand hinweisen;
**dadurch gekennzeichnet, dass**
- das System eine zentrale Datenverarbeitungseinrichtung (40) aufweist, die dazu eingerichtet ist, zum Trainieren des künstlichen mathematischen Systems (32) der Zustandsschätzeinrichtung (30) der dezentralen Steuereinrichtung (21) ein zweites künstliches mathematisches System (41), dessen Struktur mit derjenigen des künstlichen mathematischen Systems (32) der Zustandsschätzeinrichtung (30) übereinstimmt, unter Verwendung von einerseits historischen Eingangssignalen und andererseits als Zustandswerten unmittelbar solchen zeitlich zu den historischen Eingangssignalen gehörenden elektrischen Spannungen an Knoten des Teilnetzes (13a) und/oder elektrischen Ströme auf Leitungsabschnitten des Teilnetzes (13a) unter Bildung von Trainingsparametern, die das Verhalten des zweiten künstlichen mathematischen Systems (41) bestimmen, anzulernen, wobei die zu den historischen Eingangssignalen gehörenden elektrischen Spannungen und/oder elektrischen Ströme direkt mit an den jeweiligen Knoten und/oder Leitungsabschnitten installierten Messgeräten erfasst worden sind, wobei die Zustandswerte hierfür aus einem Archivsystem entnommen werden, in dem sie nach ihrer Messung gemeinsam mit einer den Zeitpunkt ihrer Messung angebenden Zeitinformation abgespeichert worden sind.

**Claims**

**1.** Method for determining state values for describing operating states in an energy supply network (10), which comprises a subnetwork (13a) having electrical loads (L) and/or electrical sources (S), wherein

- a decentralized control device (21) is associated with the subnetwork (13a) and comprises a state estimation device (30) by means of which state values that specify voltages at nodes of the subnetwork (13a) and/or an electric current on line sections of the subnetwork (13a) are estimated by using input signals supplied by the state estimation device;
- the state estimation device (30) comprises an artificial mathematical system (32), which is trained in such a way that it determines the state values by using the input signals, wherein input signals that specify an environmental state present in the region of the subnetwork (13a) are fed to the state estimation device (30); and
- the decentralized control device (21) comprises an evaluation device (31) by means of which the state values are checked to determine whether they indicate an impermissible operating state of the subnetwork (13a);
**characterized in that**
- in order to train the artificial mathematical system (32), on the one hand historical input signals and on the other hand such voltages at nodes of the subnetwork (13a) and/or electric currents on line sections of the subnetwork (13a) associated in terms of time with the historical input signals that have been detected directly using measurement devices installed at the respective nodes and/or line sections are used directly as state values, wherein the state values for this purpose are obtained from an archive system in which they have been stored after their measurement together with a piece of time information that specifies the time of their measurement;

and **in that**

- the evaluation device (31) actuates controllable transformers and/or switches capacitor batteries on or off when an impermissible operating state is identified.

2. Method according to Claim 1, **characterized in that**

- an indication signal that specifies an impermissible operating state is generated by means of the decentralized control device (21) when the state values indicate an impermissible operating state.

3. Method according to Claim 1 or 2, **characterized in that**

- an artificial neural network, a support-vector machine or an ARX model is used as the artificial mathematical system (32).

4. Method according to one of the preceding claims, **characterized in that**

- in order to train the artificial mathematical system (32), a second artificial mathematical system (41) whose structure corresponds to that of the artificial mathematical system (32) of the state estimation device (30) is trained in a central data processing device (40) by forming training parameters that determine the behaviour of the second artificial mathematical system (41); and
- the training parameters are transmitted to the artificial mathematical system (32) of the state estimation device (30) and taken over by said system.

5. Method according to one of Claims 1 to 3, **characterized in that**

- the artificial mathematical system (32) is trained in the decentralized control device (21) by forming training parameters that determine the behaviour of the artificial mathematical system (41); and
- the training parameters are subsequently taken over by the artificial mathematical system (32).

6. Method according to one of the preceding claims, **characterized in that**

- a control signal that is used to control at least one component of the subnetwork (13a) is generated when an indication signal is present.

7. Method according to one of the preceding claims, **characterized in that**

- one or more of the following signals is/are used as input signals:

- a weather signal that specifies the current weather in the region of the subnetwork (13a);
- a time signal that specifies the current time;
- a reference signal that specifies a generation and/or consumption characteristic of at least one typical source and/or load in the subnetwork (13a);
- a day type signal that specifies the type of current day;
- a switching state signal that specifies a switching state of switching devices (22) in the subnetwork (13a).

8. Method according to Claim 7, **characterized in that**

- the artificial mathematical system (32) has a first operating type in which it generates state signals in the form of voltages at nodes of the subnetwork (13a) and electric currents on line sections of the subnetwork (13a) by using the input signals; and
- the artificial mathematical system (32) has a second operating type in which it generates state signals exclusively in the form of voltages at nodes of the subnetwork (13a) by using the input signals and additional measurement values of currents and/or voltages at a transmission point of the subnetwork (13a).

9. Method according to Claim 8, **characterized in that**

- the operating type of the artificial mathematical system (32) can be switched over between the first operating type and the second operating type.

10. Method according to Claim 7, **characterized in that**

- input signals used are also measurement values of electrical variables that have been detected in a transmission or distribution point of the subnetwork (13a) or a location of the subnetwork (13a) graded as particularly essential for the operation of the subnetwork (13a) on the basis of network planning related to the subnetwork (13a).

11. Method according to one of the preceding claims, **characterized in that**

- the control device (21) compares state values determined by means of the state estimation device (30) during operation of the subnetwork (13a) with electrical parameters measured for selected measurement locations of the subnetwork (13a); and
- if there is a deviation between the state values and the electrical parameters that is above a tolerance threshold value, renewed training of the artificial mathematical system (32) of the state estimation device (30) is carried out.

12. Method according to one of the preceding claims, **characterized in that**

- the indication signal is generated when a threshold value infringement is identified based on at least one of the estimated state values.

13. Method according to one of the preceding claims, **characterized in that**

- the input signals are supplied to the artificial mathematical system (32) as input vector and the state values are output by the artificial mathematical system (32) as output vector, wherein the sorting of the state values in the output vector is independent of the topology of the subnetwork (13a) .

14. Method according to one of the preceding claims, **characterized in that**

- the voltages and/or electric currents used for training the artificial mathematical system have been detected using electricity meters installed in the subnetwork (13a).

15. Decentralized control device (21) for determining state values for describing operating states in a subnetwork (13a), having electrical loads (L) and/or electrical sources (S), of an electrical energy supply network (10), wherein

- the decentralized control device (21) is associated with the subnetwork (13a) and comprises a state estimation device (30) configured to estimate state values that specify voltages at nodes of the subnetwork (13a) and/or an electric current on line sections of the subnetwork (13a) by using input signals supplied by the state estimation device (30) that specify an environmental state present in the region of the subnetwork (13a) ;
- the state estimation device (30) comprises an artificial mathematical system (32), which is trained to determine the state values by using the input signals; and

- the decentralized control device (21) comprises an evaluation device (31) configured to check the state values to determine whether they indicate an undesired electrical operating state of the subnetwork (13a) of the energy supply network (10);
**characterized in that**
- the decentralized control device (21) is configured, in order to train the artificial mathematical system (32), to use directly as state values on the one hand historical input signals and on the other hand such voltages at nodes of the subnetwork (13a) and/or electric currents on line sections of the subnetwork (13a) associated in terms of time with the historical input signals that have been detected directly using measurement devices installed at the respective nodes and/or line sections, wherein the state values for this purpose are removed from an archive system in which they have been stored after their measurement together with a piece of time information that specifies the time of their measurement; and **in that**
- the evaluation device (31) is designed to actuate controllable transformers and/or to switch capacitor batteries on or off when an impermissible operating state is identified.

16. Decentralized control device according to Claim 15, **characterized in that**

- the evaluation device (31) is configured to generate the indication signal if the state values indicate an undesired electrical operating state.

17. Decentralized control device (31) according to Claim 15 or 16, **characterized in that**

- the control device (21) is a constituent part of a distribution substation (20) associated with the subnetwork (13a) .

18. System for determining state values for describing operating states in a subnetwork (13a), having electrical loads (L) and/or electrical sources (S), of an electrical energy supply network (10), with

- a decentralized control device (21) associated with the subnetwork (13a) and which comprises a state estimation device (30) configured to estimate state values that specify voltages at nodes of the subnetwork (13a) and/or an electric current on line sections of the subnetwork (13a) by using input signals supplied by the state estimation device (30) that specify an environmental state present in the region of the subnetwork (13a), wherein the state estimation device (30) comprises an artificial mathematical system (32), which is trained to determine the state values by using the input signals; and

- the decentralized control device (21) comprises an evaluation device (31) configured to check the state values to determine whether they indicate an undesired electrical operating state of the subnetwork (13a) of the energy supply network (10), and the evaluation device (31) is configured to generate the indication signal if the state values indicate an undesired electrical operating state;

**characterized in that**

- the system has a central data processing device (40) configured, in order to train the artificial mathematical system (32) of the state estimation device (30) of the decentralized control device (21), to train a second artificial mathematical system (41) whose structure corresponds to that of the artificial mathematical system (32) of the state estimation device (30) using directly as state values on the one hand historical input signals and on the other hand such voltages at nodes of the subnetwork (13a) and/or electric currents on line sections of the subnetwork (13a) associated in terms of time with the historical input signals by forming training parameters that determine the behaviour of the second artificial mathematical system (41), wherein the voltages and/or electric currents associated with the historical input signals have been detected directly using measurement devices installed at the respective nodes and/or line sections, wherein the state values for this purpose are obtained from an archive system in which they have been stored after their measurement together with a piece of time information that specifies the time of their measurement.

## Revendications

**1.** Procédé de détermination de valeurs d'état pour la description d'états de fonctionnement d'un réseau (10) d'alimentation en énergie, qui comprend un réseau partiel (13a) ayant des charges (L) électriques et/ou des sources (S) électriques, dans lequel

- on affecte au réseau (13a) partiel un dispositif (21) décentralisé de commande, qui comprend un dispositif (30) d'estimation d'états, au moyen duquel on estime, en utilisant des signaux d'entrée envoyés par le dispositif d'estimation d'états, des valeurs d'états, qui indiquent des tensions électriques à des nœuds qui du réseau (13a) partiel et/ou un courant électrique sur des tronçons de ligne du réseau (13a) partiel ;

- le dispositif (30) d'estimation d'états comprend un système (32) mathématique artificiel, qui subit un apprentissage de manière à déterminer des valeurs d'états en utilisant les signaux d'entrée, dans lequel on envoie au dispositif (30) d'estimation d'états des signaux d'entrée, qui indiquent un état ambiant présent dans la partie du réseau (13a) partiel ;

- le dispositif (21) décentralisé de commande comprend un dispositif (31) d'exploitation, au moyen duquel on contrôle les valeurs d'états sur le point de savoir si elles indiquent un état de fonctionnement inadmissible du réseau (13a) partiel ; **caractérisé en ce que**

- pour faire l'apprentissage du système (32) mathématique artificiel, on utilise d'une part des signaux d'entrée historiques et d'autre part comme valeur d'états directement des tensions électriques à des nœuds du réseau (13a) partiel et/ou des courants électriques sur des tronçons de ligne du réseau (13a) partiel appartenant temporellement aux signaux d'entrée historiques, qui ont été détectés directement par des appareils de mesure installés aux nœuds et/ou aux tronçons de ligne respectifs, dans lequel on prélève à cet effet des valeurs d'état d'un système d'archivé, dans lequel elles ont été mises en mémoire après leur mesure conjointement avec une information temporelle indiquant l'instant de leur mesure ; et **en ce que**

- à la détection d'un état de fonctionnement inadmissible, le dispositif (31) d'exploitation commande des transformateurs réglables et/ou met en circuit ou hors circuit des batteries de condensateur.

**2.** Procédé suivant la revendication 1, **caractérisé en ce que**

- au moyen du dispositif (21) décentralisé de commande, on produit un signal d'indication indiquant un état de fonctionnement inadmissible si les valeurs d'état indiquent un état de fonctionnement inadmissible.

**3.** Procédé suivant la revendication 1 ou 2, **caractérisé en ce que**

- on utilise comme système (32) mathématique artificiel un réseau neuronal artificiel, une machine à vecteur support ou un modèle ARX.

**4.** Procédé suivant l'une des revendications précédentes, **caractérisé en ce que**

- pour faire l'apprentissage du système (32) mathématique artificiel, on fait subir, dans un dispositif (40) central de traitement de données en formant des paramètres d'apprentissage, qui déterminent le comportement du deuxième système (41) mathématique artificiel un apprentissage à un deuxième système (41) mathématique artificiel, dont la structure coïncide avec celle du système (32) mathématique artificiel du dispositif (30) d'estimation d'état ; et
- on transmet les paramètres d'apprentissage du système (32) mathématique artificiel au dispositif (30) d'estimation d'état et on les prend en charge par celui-ci.

5. Procédé suivant l'une des revendications 1 à 3, **caractérisé en ce que**

- on fait subir un apprentissage au système (32) mathématique artificiel dans le dispositif (21) décentralisé de commande en formant des paramètres d'apprentissage, qui déterminent le comportement du système (41) mathématique artificiel ; et
- on prend en charge ensuite les paramètres d'apprentissage par le système (32) mathématique artificiel.

6. Procédé suivant l'une des revendications précédentes, **caractérisé en ce que**

- en présence d'un signal d'indication, on produit un signal de commande qui pour la commande tire partie au moins d'un composant du réseau (13a) partiel.

7. Procédé suivant l'une des revendications précédentes, **caractérisé en ce que**

- on utilise comme signaux d'entrée un ou plusieurs des signaux suivants :

- un signal d'intempérie indiquant l'intempérie en cours dans la partie du réseau (13a) partiel ;
- un signal de temps indiquant l'heure en cours ;
- un signal de référence indiquant une caractéristique de production et/ou de consommation d'au moins une charge et/ou d'une source typique dans le réseau (13a) partiel ;
- un signal de type de jour indiquant le type du jour en cours ;
- un signal d'état de commutation indiquant un état de commutation de dispositif (22) de commutation du réseau (13a) partiel.

8. Procédé suivant la revendication 7, **caractérisé en ce que**

- le système (32) mathématique artificiel a un premier type de fonctionnement, dans lequel en utilisant les signaux d'entrée, il produit des signaux d'état sous la forme de tensions à des nœuds du réseau (13a) partiel et de courants électriques sur des tronçons de ligne du réseau (13a) partiel ; et
- le système (32) mathématique artificiel a un deuxième type de fonctionnement, dans lequel en utilisant les signaux d'entrée et des valeurs de mesure supplémentaires de courants et/ou de tensions en un point de transfert du réseau (13a) partiel, il produit des signaux d'état exclusivement sous la forme de tensions en des nœuds du réseau (13a) partiel.

9. Procédé suivant la revendication 8, **caractérisé en ce que**

- le type de fonctionnement du système (32) mathématique artificiel peut commuter entre le premier type de fonctionnement et le deuxième type de fonctionnement.

10. Procédé suivant la revendication 7, **caractérisé en ce que**

- on utilise comme signaux d'entrée en outre des valeurs de mesure de grandeurs électriques, qui ont été détectées en un point de transfert ou de distribution du réseau (13a) partiel ou en un point classé comme particulièrement sensible du réseau (13a) partiel en raison d'une planification, rapportée au réseau (13a) partiel.

11. Procédé suivant l'une des revendications précédentes, **caractérisé en ce que**

- le dispositif (21) de commande compare des valeurs d'état, déterminées au moyen du dispositif (32) d'estimation d'état, en fonctionnement du réseau (13a) partiel à des paramètres électriques, mesurés en des points de mesure sélectionnés du réseau (13a) partiel ; et
- s'il y a un écart au-delà d'une valeur de seuil de tolérance entre les valeurs d'état et les paramètres électriques, on effectue un apprentissage renouvelé du système (32) mathématique artificiel du dispositif (30) d'estimation d'état.

12. Procédé suivant l'une des revendications précédentes, **caractérisé en ce que**

- on produit un signal d'indication, si l'on détecte un franchissement d'une valeur de seuil à l'aide d'au moins l'une des valeurs d'état estimée.

13. Procédé suivant l'une des revendications précédentes, **caractérisé en ce que**

- on envoie les signaux d'entrée sous la forme d'un vecteur d'entrée au système (32) mathématique artificiel et l'on sort les valeurs d'état du système (32) mathématique artificiel sous la forme d'un vecteur de sortie, le tri des valeurs d'état dans le vecteur de sortie étant indépendant de la topologie du réseau (13a) partiel.

14. Procédé suivant l'une des revendications précédentes, **caractérisé en ce que**

   - les tensions électriques et/ou courants électriques, utilisés pour l'apprentissage du système mathématique artificiel, ont été détectés par des compteurs d'énergie électrique montés dans le réseau (13a) artificiel.

15. Dispositif (21) décentralisé de commande pour la détermination de valeurs d'état, afin de décrire des états de fonctionnement d'un réseau (13a) partiel ayant des charges (L) électriques et/ou des sources (S) électriques d'un réseau (10) d'alimentation en énergie électrique, dans lequel

   - le dispositif (21) décentralisé de commande est affecté au réseau (13a) partiel et comprend un dispositif (30) d'estimation d'état qui est conçu pour estimer, en utilisant des signaux d'entrée envoyés par le dispositif (30) d'estimation d'état, qui indiquent un état ambiant présent dans la partie du réseau (13a) partiel, des valeurs d'état, qui indiquent des tensions électriques en des nœuds du réseau (13a) partiel et/ou un courant électrique sur des tronçons de ligne du réseau (13a) partiel ;
   - le dispositif (30) d'estimation d'état comprend un système (32) mathématique artificiel qui a subi un apprentissage pour déterminer les valeurs d'état en utilisant les signaux d'état ; et
   - le dispositif (21) décentralisé de commande comprend un dispositif (31) d'exploitation qui est conçu pour contrôler les valeurs d'état sur le point de savoir si elles indiquent un état de fonctionnement électrique non souhaité du réseau (13a) partiel du réseau (10) d'alimentation en énergie ;
   **caractérisé en ce que**
   - le dispositif (21) décentralisé de commande est conçu pour utiliser pour faire l'apprentissage du système (32) mathématique artificiel d'une part des signaux d'entrée historiques et d'autre part comme valeurs d'état directement des tensions électriques en des nœuds du réseau (13a) partiel, et/ou des courants électriques sur des tronçons de ligne du réseau (13a) partiel appartenant dans le temps aux signaux d'entrée historiques, qui ont été détectés directement par des appareils de mesure montés sur les nœuds et/ou les tronçons de ligne respectifs, dans lequel les valeurs d'état sont prélevées à cet effet d'un système d'archivé, dans lequel elles ont été mises en mémoire après leur mesure conjointement avec une information temporelle indiquant l'instant de leur mesure ;
   - le dispositif (31) d'exploitation est constitué pour, à la détection d'un état de fonctionnement inadmissible, commander des transformateurs réglables et/ou mettre en circuit ou hors circuit des batteries de condensateur.

16. Dispositif décentralisé de commande suivant la revendication 15, **caractérisé en ce que**

   - le dispositif (31) d'exploitation est conçu pour produire le signal d'indication, si les valeurs d'état indiquent un état de fonctionnement électrique non souhaité.

17. Dispositif décentralisé de commande suivant la revendication 15 ou 16,
   **caractérisé en ce que**

   - le dispositif (21) de commande fait partie d'un poste (20) de réseau de localisation affecté au réseau (13a) partiel.

18. Système de détermination de valeurs d'état pour la description d'états de fonctionnement d'un réseau (13a) partiel ayant des charges (L) électriques et/ou des sources (S) électriques d'un réseau (10) d'alimentation en énergie électrique, comprenant

   - un dispositif (21) décentralisé de commande, qui est affecté au réseau (13a) partiel et qui comprend un dispositif (30) d'estimation d'état conçu pour estimer des valeurs d'état, qui indiquent des tensions électriques en des nœuds du réseau (13a) partiel et/ou un courant électrique sur des tronçons de ligne du réseau (13a) partiel en utilisant des signaux d'entrée envoyés par le dispositif (30) d'estimation d'état, qui indiquent un état ambiant présent dans la partie du réseau (13a) partiel, dans lequel le dispositif (30) d'estimation d'état comprend un système (32) mathématique artificiel qui subit un apprentissage pour en utilisant les signaux d'entrée déterminer les valeurs d'état; et
   - le dispositif (21) décentralisé de commande comprend un dispositif (31) d'exploitation qui est conçu pour contrôler les valeurs d'état sur le point de savoir si elles indiquent un état de fonctionnement électrique non souhaité du réseau (13a) partiel du réseau (10) d'alimentation en énergie et le dispositif (31) d'exploitation est conçu pour produire le signal d'indication, si les valeurs d'état indiquent un état de fonctionnement électrique non souhaité;

**caractérisé en ce que**

- le système a un dispositif (40) central de traitement de données, qui est conçu pour faire, pour l'apprentissage du système (32) mathématique artificiel du dispositif (30) d'estimation d'état du dispositif (21) décentralisé de commande, l'apprentissage d'un deuxième système (41) mathématique artificiel, dont la structure coïncide avec celle du système (32) mathématique artificiel du dispositif (30) d'estimation d'état, en utilisant des signaux d'entrée historiques d'une part et d'autre part comme valeurs d'état directement des tensions électriques en des nœuds du réseau (13a) artificiel et/ou des courants électriques sur des tronçons de ligne du réseau (13a) artificiel, appartenant dans le temps aux signaux d'entrée historiques, en formant des paramètres d'apprentissage qui définissent le comportement du deuxième système (41) mathématique artificiel, dans lequel les tensions électriques et/ou les courants électriques appartenant aux signaux d'entrée historiques ont été détectés directement par des appareils de mesure montés aux nœuds et/ou tronçons de ligne respectifs, dans lequel les valeurs d'état sont prélevées à cet effet d'un système d'archivé dans lequel elles ont été mises en mémoire après leur mesure conjointement avec une information temporelle indiquant l'instant de leur mesure.

FIG 1

FIG 2

FIG 3

FIG 4

## FIG 5

## FIG 6

FIG 7

EP 3 336 995 B1

FIG 8

# FIG 9

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2942855 A1

- EP 3107174 A1